# EUROPÄISCHE PATENTSCHRIFT

(11) **EP 3 294 574 B1**
(45) Veröffentlichungstag und Bekanntmachung des Hinweises auf die Patenterteilung: **25.12.2019**
(21) Anmeldenummer: 16722574.7
(22) Anmeldetag: 29.04.2016
(51) Int. Cl.: B60C 1/00, C08C 19/25, C08C 19/44, C08L 7/00, C08L 15/00, C08K 3/36

(54) **VERBESSERUNG DES ROLLWIDERSTANDS VON DIENKAUTSCHUKREIFEN DURCH SILANMODIFIZIERTE POLYBUTADIENE**
IMPROVEMENT OF THE ROLL RESISTANCE OF DIENE RUBBER TIRES BY MEANS OF SILANE-MODIFIED POLYBUTADIENES
AMÉLIORATION DE LA RÉSISTANCE AU ROULEMENT DE PNEUS EN CAOUTCHOUC DIÉNIQUE À L'AIDE DE POLYBUTADIÈNE MODIFIÉ PAR UN SILANE

(30) Priorität: 13.05.2015 EP 15167620
(43) Veröffentlichungstag der Anmeldung: 21.03.2018
(73) Patentinhaber: Evonik Operations GmbH, 45128 Essen (DE)
(72) Erfinder: HABERKORN, Niko, 46286 Dorsten Rhade (DE); RÖBEN, Caren, 45133 Essen (DE); KRANNIG, Kai-Steffen, 44137 Dortmund (DE); WEHMEIER, Andre, 50996 Köln (DE); BERLINEANU, Andreas, 45772 Marl (DE); BEIERLEIN, Christine, 45891 Gelsenkirchen (DE); GLÖCKNER, Patrick, 45721 Haltern am See (DE); MASCHKE, Dominik, 50321 Brühl (DE); MOSER, Ralph, 07310 Jersey City, NJ (US)
(74) Vertreter: Evonik Patent Association
(86) Internationale Anmeldenummer: PCT/EP2016/059594
(87) Internationale Veröffentlichungsnummer: WO 2016/180649

(56) Entgegenhaltungen:
- EP-A1- 1 479 698
- EP-A1- 2 266 819
- EP-A1- 2 679 605
- US-A1- 2014 121 316
- DATABASE WPI Week 201534 Thomson Scientific, London, GB; AN 2015-271382 XP002748175, & JP 2015 083649 A (TOYO RUBBER IND CO LTD) 30. April 2015 (2015-04-30)

## Beschreibung

Die Erfindung betrifft die Verwendung silanmodifizierter Polybutadiene in Kautschukmischungen, insbesondere zur Verbesserung des Rollwiderstands von Dienkautschukreifen.

Grüne Reifen sind ein Trend in der Automobilindustrie. Das Hauptziel ist die Reduzierung des Rollwiderstands und damit des Kraftstoffverberbrauchs sowie des Nassrutschens bei konstantem Abrieb. Durch Zugabe von gefällten Kieselsäuren zu den Formulierungen kann dieses Ziel erreicht werden, jedoch wiesen die verwendeten Kieselsäuren eine schlechte Verträglichkeit mit der Kautschukmatrix auf. Derzeit wird dieses Problem durch Zugabe von Silanen als Verträglichkeitsvermittler gemildert. Durch kovalente Bindungsknüpfung zwischen Füllstoff und Polymer wird das Abriebsniveau silicagefüllter Reifen auf das rußgefüllter Reifen gebracht.

So offenbart JP 2008-031244 eine Reifenlaufflächen-Kautschukzusammensetzung bestehend aus mindestens entweder einem Naturkautschuk oder einem synthetischen Kautschuk und einer Füllstoff-Komponente, die ausschließlich aus Kieselsäuren oder aus Kieselsäuren und Ruß besteht, wobei die Kieselsäure aus mindestens amorphen kugelförmigen Siliciumdioxid-Mikroteilchen mit einem mittleren Teilchendurchmesser im Bereich von 0,05 bis 1,00 µm besteht. JP 2015083649, US 2014/0121316 oder EP 2266819 beschreiben die Funktionalisierung von anionisch polymerisierten Polybutadienen. In EP 1479698 wird die Funktionalisierung von Polybutadienen mit einem Vinylgehalt unter 2% beschrieben.

In der EP 2818505 wird eine Kautschukmischung vorgeschlagen, bei der Dienkautschuke mit Acrylamiden und/oder mit Silan- oder Zinn-modifizierten Acrylamiden umgesetzt werden. Die im Stand der Technik beschriebenen Systeme sind sehr aufwändig herzustellen.

Es besteht also ein Bedarf an verbesserten Kautschukmischungen, die auf einfache Weise erhalten werden können und verbesserte Abriebeigenschaften aufweisen.

Im Rahmen der vorliegenden Erfindung kann in für den Fachmann überraschender Weise gezeigt werden, dass der Einsatz von silanmodifzierten Polybutadienen mit spezifischer Mikrostruktur in Kautschukmischungen zu Reifen mit verbesserten Eigenschaften führt.

Demgemäß ist ein erster Gegenstand der vorliegenden Erfindung die Verwendung von silanmodifizierten, insbesondere silanterminierten, Polybutadienen in Kautschukmischungen, wobei das Polybutadien die aus 1,3-Butadien abgeleiteten Monomereinheiten
(A) 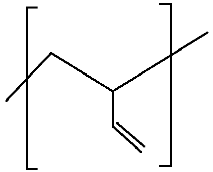
(B) 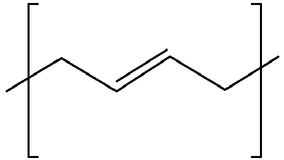 und
(C) 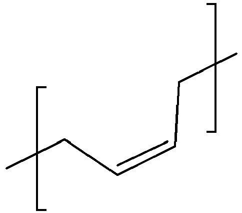 umfasst, und wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei die silanmodifizierten Polybutadiene erhältlich sind durch Umsetzung von durch radikalische Polymerisation hergestellten hydroxyterminierten Polybutadienen mit einer oder mehreren Organosilanverbindungen.

Die erfindungsgemäß eingesetzten silanmodifizierten Polybutadiene haben in Kautschukmischungen den Vorteil, dass die Energiedissipation, zum Beispiel der Rollwiderstand, sowie der DIN Abrieb verbessert werden.

Das erfindungsgemäß eingesetzte silanmodifizierte Polybutadien wird durch eine Umsetzung von durch radikalische Polymerisation hergestellten hydroxyterminierten Polybutadienen mit einer oder mehreren Organosilanverbindungen, die eine Anknüpfung an die endständigen Hydroxygruppen des Polybutadiens erlauben, erhalten.

Im Rahmen der vorliegenden Erfindung umfasst bereits das durch radikalische Polymerisation hergestellte hydroxyterminierte Polybutadien die aus 1,3-Butadien abgeleiteten Monomereinheiten
(A) 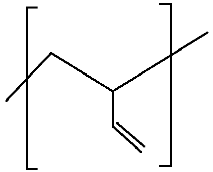
(B) 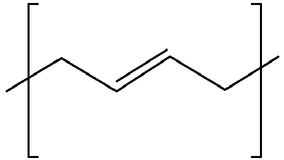 und
(C) 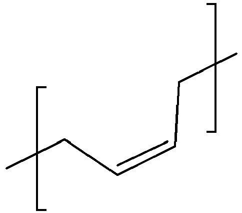 wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt.

Bei dem vorab genannten hydroxyterminierten Polybutadien handelt es sich um ein durch radikalische Polymerisation von 1,3-Butadien erzeugtes Polybutadien mit Hydroxygruppen, jeweils umfassend die im Polybutadien enthaltenen aus 1,3-Butadien abgeleiteten Monomereinheiten A), B) und C), wobei eine eckige Klammer bei der in dieser Anmeldung gewählten formelmäßigen Darstellung der im Polybutadien enthaltenen aus 1,3-Butadien abgeleiteten Monomereinheiten A), B) und C) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer Hydroxygruppe verbunden ist. Die Monomereinheiten A), B) und C) können dabei in beliebiger Reihenfolge im Polymer angeordnet sein. Bevorzugt ist eine statistische Anordnung.

In einer bevorzugten Ausführungsform beträgt der Anteil von A), B) und C) an der Gesamtheit der im Polybutadien enthaltenen aus 1,3-Butadien abgeleiteten Monomereinheiten jeweils und unabhängig voneinander wenigstens 10 Mol-%.

Insbesondere bevorzugt beträgt der Anteil von A) an der Gesamtheit der im Polybutadien enthaltenen aus 1,3-Butadien abgeleiteten Monomereinheiten 15 bis 30 Mol-%, der Anteil von B) an der Gesamtheit der im Polybutadien enthaltenen aus 1,3-Butadien abgeleiteten Monomereinheiten 50 bis 70 Mol-% und der Anteil von C) an der Gesamtheit der im Polybutadien enthaltenen aus 1,3-Butadien abgeleiteten Monomereinheiten 15 bis 30 Mol-%. Das mittlere Molekulargewicht, bestimmt durch Gelpermeationschromatographie, der hydroxyterminierten Polybutadiene liegt typischerweise zwischen 1.000 und 10.000 g/mol, bevorzugt, 1.500-5.000 g/mol, besonders bevorzugt 1.500-3.500 g/mol.

In einer weiteren Ausführungsform können neben den im Polybutadien enthaltenen aus 1,3-Butadien abgeleiteten Monomereinheiten A), B) und C) auch noch andere Monomereinheiten enthalten sein, insbesondere solche, die nicht aus 1,3-Butadien abgeleitet sind. In einer bevorzugtesten Ausführungsform stellt die Gesamtheit der im Polybutadien enthaltenen aus 1,3-Butadien abgeleiteten Monomereinheiten A), B) und C) jedoch einen Anteil an der Gesamtheit der in dem Polymer eingebauten Monomereinheiten, umfassend die aus 1,3-Butadien abgeleiteten und andere, von wenigstens 80, bevorzugt 90, noch bevorzugter 95, am bevorzugtesten 100 Molprozent dar.

Die erfindungsgemäß eingesetzten silanmodifizierten Polybutadiene werden, wie vorab ausgeführt, hergestellt durch ein Verfahren, umfassend die Schritte
a) Bereitstellen eines mittels radikalischer Polymerisation hergestellten Polybutadiens mit Hydroxygruppen, vorzugsweise endständigen Hydroxygruppen,
b) Umsetzen des Polybutadiens mit Hydroxygruppen aus Schritt a) mit einer oder mehreren Organosilanverbindungen.

Das Polybutadien mit endständigen Hydroxygruppen weist die aus 1,3-Butadien abgeleiteten Monomereinheiten
(A) 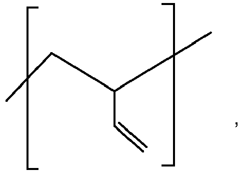
(B) 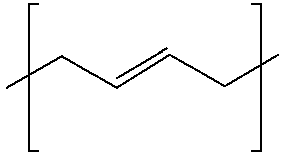 und
(C) 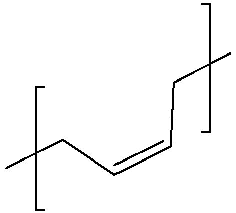 auf, wobei der Anteil von A an der Gesamtheit der im Polybutadien enthaltenen aus 1,3-Butadien abgeleiteten Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei bevorzugt der Anteil von A, B und C an der Gesamtheit der im Polybutadien enthaltenen aus 1,3-Butadien abgeleiteten Monomereinheiten jeweils und unabhängig voneinander wenigstens 10 % beträgt, wobei noch bevorzugter der Anteil von A an der Gesamtheit der im Polybutadien enthaltenen aus 1,3-Butadien abgeleiteten Monomereinheiten 10 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

Das erfindungsgemäße Verfahren erfordert als Schritt a) das Bereitstellen eines mittels radikalischer Polymerisation hergestellten Polybutadiens mit Hydroxygruppen. Ein derartiges Polybutadien mit Hydroxygruppen kann beispielsweise durch Polymerisation von 1,3-Butadien in Anwesenheit von Wasserstoffperoxid, Wasser und einem organischen Lösungsmittel hergestellt werden, wie es in der EP12169794 beschrieben ist. In einer bevorzugten Ausführungsform wird unter dem Begriff "Polybutadien", wie hierin verwendet, ein durch Polymerisation von Monomereinheiten mit jeweils wenigstens zwei konjugierten Doppelbindungen verstanden, wobei es sich in Reihenfolge zunehmender Bevorzugung bei wenigstens 80, 85, 90, 95, 98, 99 oder 99,9 % der Monomereinheiten um 1,3-Butadien handelt.

Die OH-Funktionalität der hydroxyterminierten Polybutadiene liegt zwischen 1 und 4, vorzugsweise zwischen 2 und 3.

In Schritt b) des erfindungsgemäßen Verfahrens wird das hydroxyterminierte Polybutadien mit Hydroxygruppen, vorzugsweise endständigen Hydroxygruppen, mit einer oder mehreren Organosilanverbindung umgesetzt. Die Organosilanverbindung/en werden insbesondere ausgewählt aus der Gruppe umfassend Verbindungen der Formel I

OCN-R-Si(OR¹)ₓ(R²)₃₋ₓ I

worin R lineare oder verzweigte Alkylenketten mit 1-4 Kohlenstoffatomen und R¹ bzw. R² gleichzeitig oder unabhängig voneinander lineare oder verzweigte Alkylketten mit 1-4 Kohlenstoffatomen bedeuten. Bei der genannten Umsetzung reagieren die NCO-Gruppen der Verbindungen der Formel I mit den OH-Gruppen des hydroxyterminierten Polybutadiens unter Ausbildung von -NH-CO-O-Gruppen, die die Verbindungen der Formel I und des hydroxyterminierten Polybutadiens miteinander verknüpfen.

Als Verbindungen der Formel I OCN-R-Si(OR¹)ₓ(R²)₃₋ₓ eignen sich grundsätzlich alle der vorab beschriebenen möglichen Verbindungen. Besonders bevorzugt ist x = 3 mit R¹ ausgewählt aus Methyl- und Ethylgruppen.

Geeignete Verbindungen der Formel I sind beispielsweise Isocyanatoalkylalkoxysilane, die insbesondere ausgewählt sind aus der Gruppe umfassend 3 Isocyanatopropyltrimethoxysilan, 3-Isocyanatopropyltriethoxysilan, 3 Isocyanatopropyltriisopropoxysilan, 2-Isocyanatoethyltrimethoxysilan, 2 Isocyanatoethyltriethoxysilan, 2-Isocyanatoethyltriisopropoxysilan, 4 Isocyanatobutyltrimethoxysilan, 4-Isocyanatobutyltriethoxysilan, 4 Isocyanatobutyltriisopropoxysilane, Isocyanatomethyltrimethoxysilan, Isocyanatomethyltriethoxysilan und/oder Isocyanatomethytriisopropoxysilan.

Besonders bevorzugt werden 3-Isocyanatopropyltrialkoxysilane, insbesondere 3-Isocyanatopropyltrimethoxysilan und/oder Isocyanatopropyltriethoxysilan als Verbindungen der Formel I eingesetzt.

Das Molverhältnis zwischen endständigen Hydroxygruppen und der Organosilanverbindung beträgt in Schritt b) insbesondere 0,3 bis 1,1, bevorzugt 0,6 bis 1,0.

Die Umsetzung des Polybutadiens mit Hydroxygruppen in Schritt b) erfolgt in der Regel bei Temperaturen zwischen 20 bis 70°C, bevorzugt zwischen 50 bis 70°C. Die Reaktionszeit beträgt 0,5 bis 3,5h, in der Regel 1,5 bis 2h.

Der Schritt b) des vorab genannten Verfahrens erfolgt vorzugsweise unter Schutzgasatmosphäre, bevorzugt Stickstoff oder Argon, besonders bevorzugt Stickstoff und kann in Abwesenheit oder Anwesenheit eines Lösungsmittels ablaufen. Bevorzugt erfolgt Schritt b) in Abwesenheit eines Lösungsmittels. Wird ein Lösungsmittel verwendet wird dies bevorzugt aus der Gruppe ausgewählt, die bei Raumtemperatur flüssige Aliphaten, Aromaten, Ester und Ether umfasst. In einer Ausführungsform handelt es sich bei dem Lösungsmittel um einen bei Raumtemperatur flüssigen Aliphaten, beispielsweise Hexan, Heptan, Octan, Cyclohexan, um einen bei der Raumtemperatur (25 °C) flüssigen Aromaten, beispielsweise Benzol, Toluol, um einen bei der Raumtemperatur flüssigen Ester, beispielsweise Ethylacetat, Butylacetat, oder um einen bei der Raumtemperatur flüssigen Ether, beispielsweise Diethyl- und Disiopropylether, Dioxan und Tetrahydrofuran. Art und Menge des Lösungsmittels ist abhängig vom eingesetzten Polybutadien mit Hydroxygruppen und der Menge der Organosilanverbindung. Der Anteil der Summe von Polybutadien mit Hydroxygruppen und Organosilanverbindung richtet sich nach dem gewünschten Molverhältnis.

Die Herstellung kann sowohl durch gemeinsame Vorlage aller Reaktanden, als auch durch schrittweise oder kontinuierliche Zugabe eines oder mehrerer Reaktanden erfolgen. Wurden Lösungsmittel verwendet können diese unter reduziertem Druck durch Evaporation entfernt werden.

Zur Beschleunigung der Reaktion können vorteilhaft in der Urethanchemie bekannte Katalysatoren wie Sn-, Bi-, Zn-, Ti- und andere Metallcarboxylate, wie beispielsweise Bismuth(III)-neodecanoat oder Dibutylzinndilaurat, aber auch tert.-Amine wie beispielsweise 1,4-Diazabicyclo[2.2.2]octan (DABCO) oder Triethylamin etc. eingesetzt werden.

Das erfindungsgemäß eingesetzte silanmodifizierte Polybutadien weist in einer bevorzugten Ausführungsform eine mittlere Funktionalität von 0,1 bis 4 bevorzugt 0,7 bis 2,6, besonders bevorzugt 1,2 bis 2,5 auf. Dies bedeutet, dass ein Polybutadienmolekül unabhängig von seiner Länge durchschnittlich 0,1 bis 4 bevorzugt 0,7 bis 2,6, besonders bevorzugt 1,2 bis 2,5 Silangruppen aufweist.

Im Rahmen der vorliegenden Erfindung sind bei den silanmodifizierten Polybutadienen die Silangruppen vorwiegend an die Kettenenden der Polybutadienketten gebunden, und werden daher im Rahmen der vorliegenden Erfindung als silanterminierte Polybutadiene bezeichnet.

Die durch das vorab genannte Verfahren hergestellten Polydiene, insbesondere Polybutadiene, mit endständigen Silangruppen eignen sich in besonderer Weise für die erfindungsgemäße Verwendung in Kautschukmischungen.

Ein weiterer Gegenstand der Erfindung sind Kautschukmischungen, die die erfindungsgemäßen silanmodifizierten Polybutadiene enthalten, wobei das Polybutadien die aus 1,3-Butadien abgeleiteten Monomereinheiten
(A) 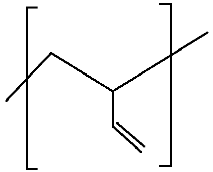
(B) 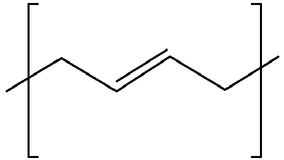 und
(C) 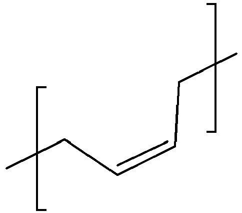 umfasst, und wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei die silanmodifizierten Polybutadiene erhältlich sind durch Umsetzung von durch radikalische Polymerisation hergestellten hydroxyterminierten Polybutadienen mit einer oder mehreren Organosilanverbindungen.

Die erfindungsgemäßen Kautschukmischungen können zur Herstellung von Formkörpern, insbesondere Luftreifen, Leichtbaureifen oder Reifenlaufflächen, eingesetzt werden.

Die erfindungsgemäßen Kautschukmischungen können Kautschuk, Füllstoff, vorzugsweise gefällte Kieselsäure, ggf. weitere Kautschukhilfsmittel, sowie mindestens ein erfindungsgemäßes silanmodifiziertes Polybutadien, enthalten.

Die erfindungsgemäßen silanmodifizierten Polybutadiene können in Mengen von 0,5 bis 25 Gew.-Teile, vorzugsweise 1 bis 15 Gew.-Teile, besonders bevorzugt 1 bis 10 Gew.-Teile, ganz besonders bevorzugt 2 bis 8 Gew.-Teile, außerordentlich bevorzugt 5 bis 8 Gew.-Teile, bezogen auf 100 Gew.-Teile Kautschuks, eingesetzt werden.

Die Zugabe der erfindungsgemäßen silanmodifizierten Polybutadiene sowie die Zugabe der Füllstoffe erfolgt bevorzugt bei Massetemperaturen von 100 bis 200 °C, besonders bevorzugt bei Massetemperaturen von 130 bis 170 °C, sie kann jedoch auch später bei Massetemperaturen von 40 bis 100 °C, z. B. zusammen mit weiteren Kautschukhilfsmitteln erfolgen.

Die erfindungsgemäßen silanmodifizierten Polybutadiene können sowohl in reiner Form als auch aufgezogen auf einen organischen oder anorganischen Träger dem Mischprozess zugegeben werden. Bevorzugte Trägermaterialien sind Kieselsäuren, natürliche oder synthetische Silikate, Aluminiumoxid, Wachse, Polymere oder Ruße.

Des Weiteren kann das erfindungsgemäße silanmodifizierte Polybutadien auch vorreagiert mit einem biopolymeren, biooligomeren, oxidischen oder silikatischen Füllstoff dem Mischprozess zugegeben werden.

Als biopolymerer, biooligomerer, oxidischer oder silikatischer Füllstoff kann ein natürlicher und/oder synthetischer Füllstoff verwendet werden.

Der biopolymere, biooligomere, oxidische oder silikatische Füllstoff kann -OH oder -OAcetat, beispielsweise -O-C(O)-CH₃, Gruppen an der Oberfläche enthalten, die mit den reaktiven Alkoxygruppen der verwendeten silanmodifizierten Polybutadiene reagieren können.

Als biopolymerer oder biooligomerer Füllstoff kann natürliche oder modifizierte Stärke, Cellulose, Amylose, Amylopectin, Celluloseacetat, Maltose, Cellobiose, Lactose, Saccharose, Raffinose, Glycogen, Pektinstoffe, Chitin oder natürliche oder modifizierte Proteine verwendet werden.

Als natürlicher, silikatischer Füllstoff kann Silikat, beispielsweise Kaolin, Mica, Kieselgur, Diatomeenerde, Talkum, Wollastonit oder Clay oder auch Silikate unter anderem in Form von Glasfasern oder Glasgeweben verwendet werden.

Als oxidische Füllstoffe können fast alle Arten von Oxiden, beispielsweise Aluminiumoxid, Aluminiumhydroxid oder -trihydrat, Zinkoxid, Boroxide, Magnesiumoxide oder auch Übergangsmetalloxide, wie Titandioxid, verwendet werden.

Als oxidischer oder silikatischer Füllstoff können des weiteren Aluminiumsilikate, Silikate, Zeolithe, gefällte oder pyrogene Kieselsäuren verwendet werden.

Vorzugsweise wird als biopolymerer, biooligomerer, oxidischer oder silikatischer Füllstoff gefällte Kieselsäure eingesetzt.

Die Kautschukmischungen können zusätzlich Silikonöl und/oder Alkylsilan enthalten.

Als Füllstoffe können für die erfindungsgemäßen Kautschukmischungen eingesetzt werden:
- Ruße: Die hierbei zu verwendenden Ruße sind nach dem Flammruß-, Furnace- oder Gasruß-Verfahren hergestellt und besitzen BET-Oberflächen von 20 bis 200 m²/g, wie z. B. SAF-,ISAF-, HSAF-, HAF-, FEF- oder GPF-Ruße. Die Ruße können ggf. auch Heteroatome wie z. B. Si enthalten.
- Kieselsäuren, vorzugsweise gefällte Kieselsäuren, beispielsweise hergestellt durch Fällung von Lösungen von Silikaten, vorzugsweise Wasserglas oder Flammenhydrolyse von Siliciumhalogeniden mit spezifischen Oberflächen von 5 bis 1000. Vorzugsweise kann die gefällte Kieselsäure eine BET-Oberfläche von 20 bis 400 m²/g, besonders bevorzugt von 80 bis 280 m²/g, ganz besonders bevorzugt von 150 bis 210 m²/g und außerordentlich bevorzugt von 80 bis 185 m²/g. Die gefällte Kieselsäure kann eine Primärteilchengröße von 5 bis 400 nm, bevorzugt von 10 bis 100 nm, besonders bevorzugt von 10 bis 40 nm haben. Die Kieselsäuren können gegebenenfalls auch als Mischoxide mit anderen Metalloxiden, wie AI-, Mg-, Ca-, Ba-, Zn- und Titanoxiden vorliegen.
- Synthetische Silikate, wie Aluminiumsilikat, Erdalkalisilikate wie Magnesiumsilikat oder - Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Glasfasern und Glasfaserprodukte (Matten, Stränge) oder Mikroglaskugeln.

Bevorzugt können Ruße mit BET-Oberflächen von 20 bis 400 m²/g oder hochdisperse gefällte Kieselsäuren, beispielsweise mit BET-Oberflächen von 20 bis 400 m²/g in Mengen von 5 bis 150 Gew.-Teilen, jeweils bezogen auf 100 Teile Kautschuk, eingesetzt werden.

Die genannten Füllstoffe können alleine oder im Gemisch eingesetzt werden. Die erfindungsgemäße Kautschukmischung kann in einer besonders bevorzugten Ausführungsform 10 bis 150 Gew.-Teile Füllstoffe, vorzugsweise gefällte Kieselsäure, gegebenenfalls zusammen mit 0 bis 100 Gew.-Teilen Ruß, sowie 0,5 bis 25 Gew-Teile, vorzugsweise 1 bis 15 Gew.- Teile, besonders bevorzugt 1 bis 10 Gew.- Teile, ganz besonders bevorzugt 2 bis 8 Gew.- Teile, außerordentlich bevorzugt 5 bis 8 Gew.- Teile, eines erfindungsgemäßen silanmodifizierten Polybutadiens, jeweils bezogen auf 100 Gew.-Teile Kautschuk, enthalten.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u. a.
- Polybutadien (BR)
- Polyisopren (IR)
- Styrol/Butadien-Copolymerisate mit Styrolgehalten von 1 bis 60, vorzugsweise 2 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)
   sowie Mischungen dieser Kautschuke. Für die Herstellung von Kfz-Reifen sind insbesondere anionisch polymerisierte L-SBR-Kautschuke, beispielsweise mit einer Glastemperatur oberhalb von -50 °C, sowie deren Mischungen mit Dienkautschuken von Interesse.

Bevorzugt kann als Kautschuk Naturkautschuk oder Mischungen aus Naturkautschuk mit Dienkautschuk, vorzugsweise Polybutadien, Polyisopren oder Styrolbutadien-Copolymer, eingesetzt werden.

Die erfindungsgemäßen Kautschukvulkanisate können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Harze, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel werden in üblichen Mengen, die sich unter anderem nach dem Verwendungszweck richten, eingesetzt. Übliche Mengen sind z. B. Mengen von 0,1 bis 50 Gew.-Teile bezogen auf Kautschuk. In der Regel empfiehlt sich die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide können in Mengen von 0,1 bis 10 Gew.-Teile, bevorzugt 0.1 bis 5 Gew.-Teile, bezogen auf 100 Gew.-Teile Kautschuk, eingesetzt werden. Die erfindunggemäße Kautschukmischung kann ein oder mehrere Organosilane enthalten.

Das Organosilan kann ein Alkylsilan, Vinylsilan, ethoxysilylgruppenhaltiges Mercaptoorganylsilan, ethoxysilylgruppenhaltigs Thiocyanatoorganylsilan, ethoxysilylgruppenhaltigs geblocktes Mercaptoorganylsilan oder ethoxysilylgruppenhaltiges di-/polysulfidisches Alkoxysilan sein.

Das Organosilan kann bevorzugt Triethoxyalkylsilan, Triethoxyvinylsilan, Triethoxytriethoxysilylgruppenhaltiges Mercaptoorganylsilan, triethoxysilylgruppenhaltiges Thiocyanatoorganylsilan triethoxysilylgruppenhaltigs geblocktes Mercaptoorganylsilan oder triethoxysilylgruppenhaltigs di-/polysulfidisches Alkoxysilan sein.

Als weitere Organosilane können Mercaptoorganyl(alkoxysilane) mit C₈H₁₇-O-, C₁₀H₂₁-O-, C₁₂H₂₅-O-, C₁₄H₂₉-O-, C₁₆H₃₃-O- oder C₁₈H₃₇-O- Gruppen am Silicium eingesetzt werden.

Als weitere Organosilane können geblockte Mercaptoorganyl(alkoxysilane) mit C₈H₁₇-O-, C₁₀H₂₁-O-, C₁₂H₂₅-O-, C₁₄H₂₉-O-, C₁₆H₃₃-O- oder C₁₈H₃₇-O- Gruppen am Silicium oder geblockte Mercaptoorganyl(alkoxysilane) mit difunktionellen Alkoholen (Diolen) am Silicium (z. B. NXT LowV, NXT Ultra-LowV oder Silane der NXT Z-Produktgruppe der Firma Momentive) eingesetzt werden.

Als weitere Organosilane können polysulfidische Alkoxysilane der Formeln

EtO-Si(Me)₂-CH₂-CH₂-CH₂-S₂-CH₂-CH₂-CH₂-Si(Me)₂(OEt),

EtO-Si(Me)₂-CH₂-CH₂-CH₂-S₃-CH₂-CH₂-CH₂-Si(Me)₂(OEt)

oder

EtO-Si(Me)₂-CH₂-CH₂-CH₂-S₄-CH₂-CH₂-CH₂-Si(Me)₂(OEt)

eingesetzt werden.

Als weitere Organosilane können den erfindungsgemäßen Kautschukmischungen 3-Mercaptopropyl(triethoxysilan) (beispielsweise Si263 der Firma Evonik Industries AG), 3-Thiocyanatopropyl(triethoxysilan) (beispielsweise Si 264 der Firma Evonik Industries AG), Bis(triethoxysilylpropyl)polysulfid (beispielsweise Si 69 der Firma Evonik Industries AG), Bis(triethoxysilylpropyl)disulfid (beispielsweise Si 266 der Firma Evonik Industries AG) zugesetzt werden.

Als weitere Organosilane können alkylpolyetheralkoholhaltige Mercaptoorganylsilane (beispielsweise Si 363 der Firma Evonik Industries AG), alkylpolyetheralkoholhaltige, Thiocyanatoorganylsilane, oder / und alkylpolyetheralkoholhaltige, geblockte Mercaptoorganylsilane, oder alkylpolyetheralkoholhaltige, polysulfidische Silane eingesetzt werden. Die alkylpolyetheralkoholhaltigen Mercaptoorganylsilane können Verbindungen der allgemeinen Formel II

(X)₃Si-R³-SH II

sein, wobei X eine Alkyl-, Alkoxy- oder Alkylpolyethergruppe ist und mindestens ein X eine Alkylpolyethergruppe ist, R³ eine verzweigte oder unverzweigte, gesättigte oder ungesättigte, substituierte oder unsubstituierte, aliphatische, aromatische oder gemischt aliphatische /aromatische zweibindige Kohlenwasserstoffgruppe ist.

Die alkylpolyetheralkoholhaltigen, geblockten Mercaptoorganylsilane können Verbindungen der allgemeinen Formel III

(X)₃Si-R⁴-S-C(O)-R⁵ III

sein, wobei X eine Alkyl-, Alkoxy- oder Alkylpolyethergruppe ist und mindestens ein X eine Alkylpolyethergruppe ist, R⁴ eine verzweigte oder unverzweigte, gesättigte oder ungesättigte, substituierte oder unsubstituierte, aliphatische, aromatische oder gemischt aliphatische /aromatische zweibindige Kohlenwasserstoffgruppe ist und R⁵ eine verzweigte oder unverzweigte, gesättigte oder ungesättigte, substituierte oder unsubstituierte, aliphatische, aromatische oder gemischt aliphatische /aromatische einbindige Kohlenwasserstoffgruppe, bevorzugt C₁-C₂₅-, besonders bevorzugt C₂-C₂₂-, ganz besonders bevorzugt C₇-C₁₇-, außerordentlich bevorzugt C₁₁-C₁₆-, Kohlenwasserstoffgruppe, ist.

Die Menge an Organosilan kann von 0,5 bis 20 Gew.-Teile, bevorzugt 1 bis 16 Gew.-Teile, besonders bevorzugt 2 bis 12 Gew.-Teile, ganz besonders bevorzugt 3 bis 7 Gew.-Teile, bezogen auf 100 Gew.-Teile Kautschuk (phr), sein.

Bevorzugt kann die erfindungsgemäße Kautschukmischung Naturkautschuk oder Mischungen aus Naturkautschuk mit Dienkautschuk, 10 bis 150 Gew.-Teile gefällte Kieselsäure, 0 bis 100 Gew.-Teilen Ruß, 0,5 bis 20 Gew.-Teile Organosilan und 0,5 bis 25 Gew-Teile, vorzugsweise 1 bis 15 Gew.- Teile, besonders bevorzugt 1 bis 10 Gew.- Teile, ganz besonders bevorzugt 2 bis 8 Gew.-Teile, außerordentlich bevorzugt 5 bis 8 Gew.- Teile erfindungsgemäßes silanmodifiziertes Polybutadien, jeweils bezogen auf 100 Gew.-Teile Kautschuk, enthalten.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und den erfindungsgemäßen silanmodifizierten Polybutadienen kann in üblichen Mischaggregaten, wie Walzen, Innenmischern und Mischextrudern, durchgeführt werden. Die erfindungsgemäßen Kautschukvulkanisate eignen sich zur Herstellung von Formkörpern. Die erfindungsgemäßen Kautschukmischungen können zur Herstellung von Reifen, Profilen, Kabelmänteln, Schläuchen, Treibriemen, Förderbänder, Reifenbeläge, Schuhsohlen, Dichtungsringe und Dämpfungselemente verwendet werden.

Ein weiterer Gegenstand der vorliegenden Erfindung sind die erfindungsgemäß eingesetzten silanterminierten Polybutadiene, erhältlich durch ein Verfahren, umfassend die Schritte
a) Bereitstellen eines mittels radikalischer Polymerisation hergestellten Polybutadiens mit Hydroxygruppen, vorzugsweise endständigen Hydroxygruppen,
b) Umsetzen des Polybutadiens mit Hydroxygruppen aus Schritt a) mit einer Organosilanverbindung,
wobei das Polybutadien die aus 1,3-Butadien abgeleiteten Monomereinheiten
(A) 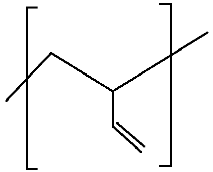
(B) 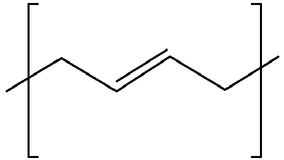 und
(C) 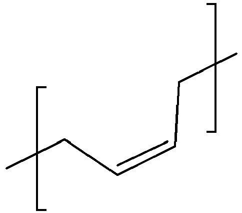 umfasst, und wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt.

Weitere bevorzugte Merkmale der Polybutadiene sind bereits vorab genannt.

Die Organosilanverbindung ist insbesondere ausgewählt aus der Gruppe umfassend Verbindungen der Formel I

OCN-R-Si(OR¹)ₓ(R²)₃₋ₓ I

worin R lineare oder verzweigte Alkylenketten mit 1-4 Kohlenstoffatomen und R¹ bzw. R² gleichzeitig oder unabhängig voneinander lineare oder verzweigte Alkylketten mit 1-5 Kohlenstoffatomen Gruppen bedeuten. Bei der genannten Umsetzung reagieren die NCO-Gruppen der Verbindungen der Formel I mit den OH-Gruppen des hydroxyterminierten Polybutadiens unter Ausbildung von -NH-CO-O-Gruppen, die die Verbindungen der Formel I und des hydroxyterminierten Polybutadiens miteinander verknüpfen.

Als Verbindungen der Formel I OCN-R-Si(OR¹)ₓ(R²)₃₋ₓ eignen sich grundsätzlich alle der vorab beschriebenen möglichen Verbindungen. Besonders bevorzugt ist x = 3 mit R¹ ausgewählt aus Methyl- und Ethylgruppen.

Geeignete Verbindungen der Formel I sind beispielsweise Isocyanatoalkylalkoxysilane, die insbesondere ausgewählt sind aus der Gruppe umfassend 3 Isocyanatopropyltrimethoxysilan, 3-Isocyanatopropyltriethoxysilan, 3 Isocyanatopropyltriisopropoxysilan, 2-Isocyanatoethyltrimethoxysilan, 2 Isocyanatoethyltriethoxysilan, 2-Isocyanatoethyltriisopropoxysilan, 4 Isocyanatobutyltrimethoxysilan, 4-Isocyanatobutyltriethoxysilan, 4 Isocyanatobutyltriisopropoxysilane, Isocyanatomethyltrimethoxysilan, Isocyanatomethyltriethoxysilan und/oder Isocyanatomethytriisopropoxysilan.

Besonders bevorzugt werden 3-Isocyanatopropyltrialkoxysilane, insbesondere 3 Isocyanatopropyltrimethoxysilan und/oder Isocyanatopropyltriethoxysilan als Verbindungen der Formel I eingesetzt.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele

### Herstellung der silanmodifizierten Polybutadiene:

### Eingesetzte Rohstoffe:

Hydroxyterminiertes Polybutadien (POLYVEST® HT; Fa. Evonik); Isocyanatopropyltriethoxysilan (Sigma Aldrich), Isocyanatopropyl-trimethoxysilan (Fa. Evonik); Coscat 83 - Bismuttrisneodecanat/Neodecansäure (58/42%) (C.H. Erbslöh); Dibutylzinnlaurat (Sigma Aldrich).

### Methoden:

### Gelpermeationschromatie (GPC) hydroxyterminierter Polybutadiene:

Die Messungen wurden bei 40°C in Tetrahydrofuran (THF) bei einer Konzentration von 1 g/L und einer Flussrate von 0,3ml/min durchgeführt. Zur chromatographischen Trennung wurden eine Vorsäule des Typs PSS SDV Micro 5µ / 4,6 x 30 mm und eine Trennsäule des Typs PSS SDV Micro linear S 5µ / 4,6 x 250 mm (2x) verwendet. Die Detektion erfolgte mittels RI-Detektor. Die Kalibration wurde mittels Polybutadienstandards (PSS-Kit Polybutadien-1,4, Mp 831-106000, Part No.:PSS-bdfkit, Mn: 1830/4330/9300/18000/33500) durchgeführt.

### Gelpermeationschromatie (GPC) silanterminierter Polybutadiene:

Die Messungen wurden bei Raumtemperatur in Tetrahydrofuran (THF) bei einer Konzentration von 5 g/L und einer Flussrate von 1ml/min durchgeführt. Zur chromatographischen Trennung wurde eine Kombination von Styrol-Divinylbenzol Säulen verwendet (2x3cm, 5µn, linear; 1x 30cm 5µm, 100Å). Die Detektion erfolgte mittels RI-Detektor. Die Kalibration wurde mittels Polystyrolstandards durchgeführt und die absoluten Molekulargewichte über die Mark-Houwink Konstanten erhalten (a= 0,73; k= 0,0266 ml/g).

### Viskositätsbestimmung:

Die Viskositäten (Kegelplatte) der Materialien wurden mit einem *Rheometer Physica MCR 301* der ANTON PAAR Germany GmbH gemäß DIN 53018 bestimmt.

### Beispiel 1:

In einer typischen Umsetzung wurden 84,4 g eines durch radikalische Polymerisation hergestellten, hydroxyterminierten Polybutadiens der Fa. Evonik und 0,05 Gew.-% des Katalysators (COSCAT 83 oder DBTL) unter Stickstoff in einem Dreihalsrundkolben ausgestattet mit Tropftrichter und Thermometer vorgelegt und auf 60 °C erhitzt. Nach Erreichen der Temperatur wurden 15,5 g 3-Isocyanatopropyltrimethoxysilan über den Tropftrichter unter Rühren hinzugefügt und die Reaktionsmischung für drei Stunden gerührt. Das Ende der Reaktion wurde durch Bestimmung des Restisocyanatgehalts (NCO < 0.1%) durch Titration ermittelt.
GPC (PS Standard): Mₙ=4.600 g/mol; M_{w}= 11.600 g/mol; D= 2.93
Viskosität (Kegelplatte, 20°C): 8,9 Pa*s

### Beispiel 2:

In einer typischen Umsetzung wurden 81,9 g eines durch radikalische Polymerisation hergestellten, hydroxyterminierten Polybutadiens der Fa. Evonik Industries AG) und 0,05 Gew.-% des Katalysators (COSCAT 83 oder DBTL) unter Stickstoff in einem Dreihalsrundkolben ausgestattet mit Tropftrichter und Thermometer vorgelegt und auf 60 °C erhitzt. Nach Erreichen der Temperatur wurden 18 g 3-Isocyanatopropyltriethoxysilan über den Tropftrichter unter Rühren hinzugefügt und die Reaktionsmischung für drei Stunden gerührt. Das Ende der Reaktion wurde durch Bestimmung des Restisocyanatgehalts (NCO < 0.1%) durch Titration ermittelt.
GPC (PS Standard): Mₙ=4.200 g/mol; M_{w}= 10.500 g/mol; D= 2.48
Viskosität (20°C): 9,6 Pa*s

### Beispiel 2A:

Herstellung gemäß Beispiel 2 unter Verwendung von 81,9 g hydroxyterminiertem Polybutadien und 18,0 g 3-Isocyanatopropyltriethoxysilan.
Viskosität (20°C): 8,5 Pa*s

### Beispiel 2B:

Herstellung gemäß Beispiel 2 unter Verwendung von 83,4 g hydroxyterminiertem Polybutadien und 16,6 g 3-Isocyanatopropyltriethoxysilan.
Viskosität (20°C): 9,4 Pa*s

### Beispiel 2C:

Herstellung gemäß Beispiel 2 unter Verwendung von 84,7 g hydroxyterminiertem Polybutadien und 15,2 g 3-Isocyanatopropyltriethoxysilan.
Viskosität (20°C): 8,8 Pa*s

### Beispiel 2D:

Herstellung gemäß Beispiel 2 unter Verwendung von 86,5 g hydroxyterminiertem Polybutadien und 13,4 g 3-Isocyanatopropyltriethoxysilan.
Viskosität (20°C): 8,7 Pa*s

### Beispiel 2E:

Herstellung gemäß Beispiel 2 unter Verwendung von 88,2 g hydroxyterminiertem Polybutadien und 11,7 g 3-Isocyanatopropyltriethoxysilan.
Viskosität (20°C): 8,5 Pa*s

### Beispiel 2F:

Herstellung gemäß Beispiel 2 unter Verwendung von 87,2 g hydroxyterminiertem Polybutadien und 12,7 g 3-Isocyanatopropyltriethoxysilan.
Viskosität (20°C): 8,2 Pa*s

### Beispiel 2G:

Herstellung gemäß Beispiel 2 unter Verwendung von 89,5 g hydroxyterminiertem Polybutadien und 10,5 g 3-Isocyanatopropyltriethoxysilan.
Viskosität (20°C): 8,2 Pa*s

### Beispiel 2H:

Herstellung gemäß Beispiel 2 unter Verwendung von 91,9 g hydroxyterminiertem Polybutadien und 8,1 g 3-Isocyanatopropyltriethoxysilan.
Viskosität (20°C): 8,5 Pa*s

### Beispiel 2I:

Herstellung gemäß Beispiel 2 unter Verwendung von 94,4 g hydroxyterminiertem Polybutadien und 5,5 g 3-Isocyanatopropyltriethoxysilan.
Viskosität (20°C): 8,4 Pa*s

### Beispiel 2J:

Herstellung gemäß Beispiel 2 unter Verwendung von 97,1 g hydroxyterminiertem Polybutadien und 2,8 g 3-Isocyanatopropyltriethoxysilan.
Viskosität (20°C): 8,4 Pa*s

### Beispiel 3:

In einer typischen Umsetzung wurden 94,43g eines durch anionische Polymerisation hergestellten hydroxyterminierten Polybutadiens und 0,05 Gew.-% des Katalysators (COSCAT 83 oder DBTL) unter Stickstoff in einem Dreihalsrundkolben ausgestattet mit Tropftrichter und Thermometer vorgelegt und auf 60 °C erhitzt. Nach Erreichen der Temperatur wurden 5,52 g 3-Isocyanatopropyltriethoxysilan über den Tropftrichter unter Rühren hinzugefügt und die Reaktionsmischung für drei Stunden gerührt. Das Ende der Reaktion wurde durch Bestimmung des Restisocyanatgehalts (NCO < 0.1%) durch Titration ermittelt.
GPC (PS Standard): Mₙ=4.800 g/mol; M_{w}= 5.000 g/mol; D= 1.04.
Viskosität (20°C): 27,8 Pa*s

### Anwendungsbeispiele:

### Beispiel 4: Kautschukmischungen I

Die für die Kautschukmischungen verwendete Rezeptur ist in der folgenden Tabelle 1 angegeben. Dabei bedeutet die Einheit phr Gewichtsanteile bezogen auf 100 Teile des eingesetzten Rohkautschuks. In den erfinderischen Gummimischungen ist das erfindungsgemäße silanmodifizierte Polybutadien in verschiedenen Dosierungen als Additiv eingesetzt.

**Tabelle 1**

| Substanz | Menge | Menge | Menge | Menge |
|---|---|---|---|---|
| | [phr] | [phr] | [phr] | [phr] |
| 1. Stufe | Ref.kautschukmischung I | Erf. Kautschukmischung II, enthaltend erf. Beispiel 1 | Erf. Kautschukmischung III, enthaltend erf. Beispiel 1 | Erf. Kautschukmischung IV, enthaltend erf. Beispiel 1 |
| NR SMR 10^{a} | 100,0 | 100,0 | 100,0 | 100,0 |
| Kieselsäure^{b} | 55,0 | 55,0 | 55,0 | 55,0 |
| Fettsäure^{c} | 3,0 | 3,0 | 3,0 | 3,0 |
| ZnO^{d} | 3,0 | 3,0 | 3,0 | 3,0 |
| 6PPD^{e} | 1,0 | 1,0 | 1,0 | 1,0 |
| TMQ^{f} | 1,0 | 1,0 | 1,0 | 1,0 |
| Ozonschutzwachs^{g} | 1,0 | 1,0 | 1,0 | 1,0 |
| Si 266^{h} | 5,0 | 5,0 | 5,0 | 5,0 |
| Beispiel 1 | | 2,5 | 5,0 | 7,5 |

| 2. Stufe | | | | |
|---|---|---|---|---|
| Batch | | | | |
| Stufe 1 | | | | |

| 3. Stufe | | | | |
|---|---|---|---|---|
| Batch | | | | |
| Stufe 2 | | | | |
| DPG-80ⁱ | 2,5 | 2,5 | 2,5 | 2,5 |
| CBS^{j} | 1,0 | 1,0 | 1,0 | 1,0 |
| Schwefel^{k} | 2,0 | 2,0 | 2,0 | 2,0 |

| | | | | |
|---|---|---|---|---|
| Verwendete Substanzen: ^{a)} NR TSR: SMR 10 der Firma Nordmann, Rassmann GmbH (TSR = Technically Specified Rubber; SMR = Standard Malaysian Rubber) ^{b)} Kieselsäure: ULTRASIL® 7000 GR der Firma Evonik Industries AG. ^{c)} Fettsäuren Gemisch, EDENOR ST1 GS, Firma Caldic Deutschland Chemie B.V. ^{d)} ZnO: ZnO RS RAL 844 C der Firma Arnsperger Chemikalien GmbH. ^{e)} 6PPD: *N*-(1,3-dimethylbutyl)-*N'*-phenyl-*p*-phenylene diamine, Vulkanox 4020/LG der Firma Rhein Chemie Rheinau GmbH. ^{f)} TMQ: polymerized 2,2,4-trimethyl-1,2-dihydroquinoline, Vulkanox HS/LG der Firma Rhein Chemie Rheinau GmbH. ^{g)} Ozonschutzwachs: Protektor G3108 der Firma Paramelt B.V. ^{h)} Si 266®: Bis(triethoxysilylpropyl)disulfide der Firma Evonik Industries AG. ⁱ⁾ DPG-80: Gemisch aus 80 % *N,N'*-Diphenylguanidin und aus 20 % elastomerem Träger und Dispergiermittel, Rhenogran® DPG-80 der Firma Rhein Chemie GmbH. ^{j)} CBS: *N*-Cyclohexyl-2-benzothiazolsulfenamid, CZ/EG-C der Firma Rhein Chemie Rheinau GmbH. ^{k)} Schwefel: Mahlschwefel 80/90° der Firma Solvay & CPC Barium Strontium GmbH & Co.KG. | | | | |

Die Mischungen werden dreistufig in einem 1,5 I Innenmischer (E-Typ) bei einer Batch-Temperatur von 150°C gemäß der in Tabelle 2 beschriebenen Mischvorschrift hergestellt.

**Tabelle 2**

| | Stufe 1 |
|---|---|
| Einstellungen | |
| Mischaggregat | Von HF Mixing Group GmbH; Typ GK 1,5 E |
| Füllgrad | 0,58 |
| Drehzahl | 70 min⁻¹ |
| Stempeldruck | 5,5 bar |
| Durchflusstemp. | 70°C |

| Mischvorgang | |
|---|---|
| 0 bis 0,5 min | SMR 10 |
| 0,5 min | ½ ULTRASIL 7000 GR, Si 266, ZnO, Fettsäure, wenn vorhanden erfindungsgemäßes silanmodifiziertes Polybutadien |
| 0,5 bis 1,5 min | Mischen |
| 1,5 min | Lüften und säubern |
| 1,5 bis 2,5 min | ½ ULTRASIL 7000 GR, Ozonschutzwachs, 6PPD, TMQ |
| 2,5 bis 4 min | Mischen bei 150°C, ggfs. Drehzahlvariation |
| 4 min | Lüften und säubern |
| 4 bis 5,5 min | Mischen bei 150°C, ggfs. Drehzahlvariation |
| 5,5 min | ausfahren und auf Labormischwalzwerk 45 s ein Fell bilden (Laborwalzwerk: Durchmesser 250 mm, Länge 190 mm, Walzenspalt 4 mm, Durchflusstemperatur 60°C) 24 h Lagerung bei Raumtemperatur |

| | Stufe 2 |
|---|---|
| Einstellungen | |
| Mischaggregat | wie in Stufe 1 bis auf |
| Füllgrad | 0,55 |
| Drehzahl | 80 min⁻¹ |
| Stempeldruck | 5,5 bar |
| Durchflusstemp. | 80°C |

| Mischvorgang | |
|---|---|
| 0 bis 1 min | Batch Stufe 1 aufbrechen |
| 1 bis 3 min | Mischen bei 150°C, ggfs. Drehzahlvariation |
| 3 min | ausfahren und auf Labormischwalzwerk 45 s ein Fell bilden |
| | (Laborwalzwerk: Durchmesser 250 mm, Länge 190 mm, |
| | Walzenspalt 4 mm, Durchflusstemperatur 60°C) |
| | 24 h Lagerung bei Raumtemperatur |
| | |

| | Stufe 3 |
|---|---|
| Einstellungen | |
| Mischaggregat | wie in Stufe 1 bis auf |
| Füllgrad | 0,52 |
| Drehzahl | 60 min⁻¹ |
| Durchflusstemp. | 50°C |

| Mischvorgang | |
|---|---|
| 0 bis 2 min | Batch Stufe 2 aufbrechen, Beschleuniger und Schwefel, mischen bei 100°C ggfs. Drehzahlvariation |
| 2 min | ausfahren und auf Labormischwalzwerk 20 s ein Fell bilden, innerhalb von weiteren 40s: 3* links, 3* rechts einschneiden und umklappen sowie 3* bei engem Walzenspalt (3 mm) stürzen und anschließend ein Fell ausziehen. (Laborwalzwerk: Durchmesser 250 mm, Länge 190 mm, Walzenspalt 3-4 mm, Durchflusstemperatur 80°C) |

Das allgemeine Verfahren zur Herstellung von Kautschukmischungen und deren Vulkanisate ist in "Rubber Technology Handbook", W. Hofmann, Hanser Verlag 1994 beschrieben.

Die Vulkanisation erfolgt bei einer Temperatur von 150 °C in einer typischen Vulkanisationspresse mit einem Haltedruck von 120 bar nach t_{95%}. Die t_{95%} Zeit wurde mittels Moving Disc Rheometer (rotorloses Vulkameter) nach DIN 53529/3 bei 150°C bestimmt.

Die gummitechnische Prüfung erfolgt gemäß den in Tabelle 3 angegebenen Prüfmethoden. In der Tabelle 4 sind die gummitechnischen Daten für die Vulkanisate angegeben.

**Tabelle 3**

| Physikalische Testung | Norm/Bedingungen |
|---|---|
| DIN Abrieb | |
| *Abrieb* / *mm³* | ISO 4649 |
| Zugversuch am Ring bei 23°C | ISO 37 |
| *Modul 300%* / *MPa* | |
| Shore A Härte bei 23°C | ISO 7619-1 |
| *Shore A Härte* / *SH* | |
| Ball Rebound 60°C | DIN EN ISO 8307 |
| *Rückprallelastizität* / % | Fallhöhe 500 mm, Stahlkugel d = 19 mm, 28 g |
| Viskoelastische Eigenschaften des Vulkanisats bei 60°C | Rubber Process Analyzer RPA 2000 (Alpha Technologies), Strain Sweep, 1.7 Hz, 0.28% - 42% Dehnung; sh."Operators Manual RPA 2000" von Alpha Technologies, February 1997 |
| *Maximaler Verlustfaktor tan δ* | |
| Viskoelastische Eigenschaften bei 60°C | ISO 4664-1 |
| | 16 Hz, 50 N Vorkraft und 25 N Amplitudenkraft, 5 min Temperierzeit, Meßwertaufnahme nach 30 s Prüfzeit |
| *Verlustfaktor tan δ* | |

**Tabelle 4**

| | Ref.kautschukmischung I | Erf. Kautschukmischung II, enthaltend erf. Beispiel 1 | Erf. Kautschukmischung III, enthaltend erf. Beispiel 1 | Erf. Kautschukmischung IV, enthaltend erf. Beispiel 1 |
|---|---|---|---|---|
| Vulkanisatergebnisse: | | | | |
| DIN Abrieb | | | | |
| *Abrieb* / *mm³* | 153 | 143 | 136 | 134 |
| Zugversuch am Ring bei 23°C | | | | |
| *Modul 300%* / *MPa* | 12,2 | 12,6 | 14,1 | 14,6 |
| Shore A Härte | 68 | 66 | 67 | 69 |
| *Shore A Härte* / *SH* | | | | |
| Ball Rebound | | | | |
| *Rückprallelastizität bei 60°C* / *%* | 71,9 | 72,7 | 75,6 | 77,3 |
| Viskoelastische Eigenschaften, 60°C, Rubber Process Analyzer (RPA), Strain Sweep, 1.7 Hz, 0.28% - 42% Dehnung | | | | |
| Maximaler Verlustfaktor tan δ / - | 0,187 | 0,143 | 0,116 | 0,100 |
| Viskoelastische Eigenschaften bei 60°C, 16 Hz, 50 N Vorkraft, 25 N Ampl.kraft | | | | |
| Verlustfaktor tan δ / - | 0,072 | 0,064 | 0,049 | 0,042 |

Die erfindungsgemäßen Kautschukmischungen II - IV zeigen einen verbesserten Rollwiderstand (geringere tan δ Werte und höhere Rückprallelastizitäten bei 60°C) im Vergleich zu der Referenzkautschukmischung I. Dieser positive Effekt nimmt mit zunehmender Menge an erfindungsgemäßem silanmodifizierten Polybutadien von Mischung II zu Mischung IV zu. Ferner wird durch den Zusatz von erfindungsgemäßem silanmodifizierten Polybutadien ein verbessertes Verstärkungsverhalten (Modul 300%) und ein geringerer Abrieb (DIN Abrieb) erzielt.

### Beispiel 5: Kautschukmischungen II

Die für die Kautschukmischungen verwendete Rezeptur ist in der folgenden Tabelle 5 angegeben. Dabei bedeutet die Einheit phr Gewichtsanteile bezogen auf 100 Teile des eingesetzten Rohkautschuks. In den erfinderischen Gummimischungen sind die erfindungsgemäßen silanmodifizierten Polybutadiene als Additiv eingesetzt und ersetzen anteilig das Schwefelsilan.

**Tabelle 5**

| Substanz | Menge | Menge | Menge |
|---|---|---|---|
| | [phr] | [phr] | [phr] |
| 1. Stufe | Ref.kautschukmischung V | Erf. Kautschukmischung VI, enthaltend erf. Beispiel 1 | Erf. Kautschukmischung VII, enthaltend erf. Beispiel 2 |
| NR SMR 10^{a} | 100,0 | 100,0 | 100,0 |
| Kieselsäure^{b} | 55,0 | 55,0 | 55,0 |
| Fettsäure^{c} | 3,0 | 3,0 | 3,0 |
| ZnO^{d} | 3,0 | 3,0 | 3,0 |
| 6PPD^{e} | 1,0 | 1,0 | 1,0 |
| TMQ^{f} | 1,0 | 1,0 | 1,0 |
| Ozonschutzwachs^{g} | 1,0 | 1,0 | 1,0 |
| Si 266^{h} | 5 | 4 | 4 |
| Beispiel 1 | | 7,5 | |
| Beispiel 2 | | | 7,5 |

| 2. Stufe | | | |
|---|---|---|---|
| Batch | | | |
| Stufe 1 | | | |

| 3. Stufe | | | |
|---|---|---|---|
| Batch | | | |
| Stufe 2 | | | |
| DPG-80ⁱ | 2,5 | 2,5 | 2,5 |
| CBS^{j} | 1,0 | 1,0 | 1,0 |
| Schwefel^{k} | 2,0 | 2,0 | 2,0 |

| | | | |
|---|---|---|---|
| Verwendete Substanzen: ^{a)} NR TSR: SMR 10 der Firma Nordmann, Rassmann GmbH (TSR = Technically Specified Rubber; SMR = Standard Malaysian Rubber) ^{b)} Kieselsäure: ULTRASIL® 7000 GR der Firma Evonik Industries AG. ^{c)} Fettsäure: Fettsäuren Gemisch, EDENOR ST1 GS, Firma Caldic Deutschland Chemie B.V. ^{d)} ZnO: ZnO RS RAL 844 C der Firma Arnsperger Chemikalien GmbH. ^{e)} 6PPD: *N*-(1,3-dimethylbutyl)-*N'*-phenyl-*p*-phenylene diamine, Vulkanox 4020/LG der Firma Rhein Chemie Rheinau GmbH. ^{f)} TMQ: polymerized 2,2,4-trimethyl-1,2-dihydroquinoline, Vulkanox HS/LG der Firma Rhein Chemie Rheinau GmbH. ^{g)} Ozonschutzwachs: Protektor G3108 der Firma Paramelt B.V. ^{h)} Si 266®: Bis(triethoxysilylpropyl)disulfide der Firma Evonik Industries AG. ⁱ⁾ DPG-80: Gemisch aus 80 % *N,N'*-Diphenylguanidin und aus 20 % elastomerem Träger und Dispergiermittel, Rhenogran® DPG-80 der Firma Rhein Chemie GmbH. ^{j)} CBS: *N*-Cyclohexyl-2-benzothiazolsulfenamid, CZ/EG-C der Firma Rhein Chemie Rheinau GmbH. ^{k)} Schwefel: Mahlschwefel 80/90° der Firma Solvay & CPC Barium Strontium GmbH & Co.KG | | | |

Die Mischungen werden dreistufig in einem 1,5 I Innenmischer (E-Typ) bei einer Batch-Temperatur von 150°C gemäß der in Tabelle 6 beschriebenen Mischvorschrift hergestellt.

**Tabelle 6**

| | Stufe 1 |
|---|---|
| Einstellungen | |
| Mischaggregat | Von HF Mixing Group GmbH; Typ GK 1,5 E |
| Füllgrad | 0,65 |
| Drehzahl | 70 min⁻¹ |
| Stempeldruck | 5,5 bar |
| Durchflusstemp. | 70°C |

| Mischvorgang | |
|---|---|
| 0 bis 0,5 min | SMR 10 |
| 0,5 min | ½ ULTRASIL 7000 GR, Si 266, ZnO, Fettsäure, wenn vorhanden erfindungsgemäßes silanmodifiziertes Polybutadien |
| 0,5 bis 1,5 min | Mischen |
| 1,5 min | Lüften und säubern |
| 1,5 bis 2,5 min | ½ ULTRASIL 7000 GR, Ozonschutzwachs, 6PPD, TMQ |
| 2,5 bis 4 min | Mischen bei 150°C, ggfs. Drehzahlvariation |
| 4 min | Lüften |
| 4 bis 5,5 min | Mischen bei 150°C, ggfs. Drehzahlvariation |
| 5,5 min | ausfahren und auf Labormischwalzwerk 45 s ein Fell bilden (Laborwalzwerk: Durchmesser 250 mm, Länge 190 mm, Walzenspalt 4 mm, Durchflusstemperatur 60°C) 24 h Lagerung bei Raumtemperatur |

| | Stufe 2 |
|---|---|
| Einstellungen | |
| Mischaggregat | wie in Stufe 1 bis auf |
| Füllgrad | 0,62 |
| Drehzahl | 80 min⁻¹ |
| Stempeldruck | 5,5 bar |
| Durchflusstemp. | 80°C |

| Mischvorgang | |
|---|---|
| 0 bis 1 min | Batch Stufe 1 aufbrechen |
| 1 bis 3 min | Mischen bei 150°C, ggfs. Drehzahlvariation |
| 3 min | ausfahren und auf Labormischwalzwerk 45 s ein Fell bilden (Laborwalzwerk: Durchmesser 250 mm, Länge 190 mm, Walzenspalt 4 mm, Durchflusstemperatur 60°C) |
| | 4 h Lagerung bei Raumtemperatur |
| | |

| | Stufe 3 |
|---|---|
| Einstellungen | |
| Mischaggregat | wie in Stufe 1 bis auf |
| Füllgrad | 0,59 |
| Drehzahl | 60 min⁻¹ |
| Durchflusstemp. | 50°C |

| Mischvorgang | |
|---|---|
| 0 bis 2 min | Batch Stufe 2 aufbrechen, Beschleuniger und Schwefel, mischen bei 100°C ggfs. Drehzahlvariation |
| 2 min | ausfahren und auf Labormischwalzwerk 20 s ein Fell bilden, innerhalb von weiteren 40 s: 3* links, 3* rechts einschneiden und umklappen sowie 3* bei engem Walzenspalt (3 mm) stürzen und anschließend ein Fell ausziehen. |
| | (Laborwalzwerk: Durchmesser 250 mm, Länge 190 mm, Walzenspalt 3-4 mm, Durchflusstemperatur 80°C) |

Das allgemeine Verfahren zur Herstellung von Kautschukmischungen und deren Vulkanisate ist in "Rubber Technology Handbook", W. Hofmann, Hanser Verlag 1994 beschrieben.

Die Vulkanisation erfolgt bei einer Temperatur von 150 °C in einer typischen Vulkanisationspresse mit einem Haltedruck von 120 bar nach t_{95%}. Die t_{95%} Zeit wird mittels Moving Disc Rheometer (rotorloses Vulkameter)nach DIN 53529/3 bei 150°C bestimmt.

Die gummitechnische Prüfung erfolgt gemäß den in Tabelle 3 angegebenen Prüfmethoden.

In der Tabelle 7 sind die gummitechnischen Daten für die Vulkanisate angegeben.

**Tabelle 7**

| | Ref.kautschukmischung V | Erf. Kautschukmischung VI, enthaltend erf. Beispiel 1 | Erf. Kautschukmischung VII, enthaltend erf. Beispiel 2 |
|---|---|---|---|
| Vulkanisatergebnisse: | | | |
| DIN Abrieb | | | |
| *Abrieb* / *mm³* | 129 | 114 | 119 |
| Zugversuch am Ring bei 23°C | | | |
| *Modul 300%* / *MPa* | 12,6 | 13,0 | 13,9 |
| Shore A Härte | 62 | 62 | 64 |
| *Shore A Härte* / *SH* | | | |
| Ball Rebound | 71,2 | 76,8 | 76,6 |
| *Rückprallelastizität bei 60°C*/*%* | | | |
| Viskoelastische Eigenschaften, 60°C, Rubber Process Analyzer (RPA), Strain Sweep, 1.7 Hz, 0.28% - 42% Dehnung | | | |
| Maximaler Verlustfaktor tan δ / - | 0,137 | 0,086 | 0,092 |
| Viskoelastische Eigenschaften bei 60°C, 16 Hz, 50 N Vorkraft, 25 N Ampl.kraft | | | |
| Verlustfaktor tan δ / - | 0,067 | 0,055 | 0,051 |

Die erfindungsgemäßen Kautschukmischungen VI - VII zeigen einen verbesserten Rollwiderstand (geringere tan δ Werte und höhere Rückprallelastizitäten bei 60°C) im Vergleich zu der Referenzkautschukmischung V. Ferner wird durch den Zusatz von erfindungsgemäßem silanmodifizierten Polybutadien ein verbessertes Verstärkungsverhalten (Modul 300%) und ein geringerer Abrieb (DIN Abrieb) erzielt.

### Beispiel 6: Kautschukmischungen III

Die für die Kautschukmischungen verwendeten Rezepturen sind in der folgenden Tabelle 8 angegeben. Dabei bedeutet die Einheit phr Gewichtsanteile bezogen auf 100 Teile des eingesetzten Rohkautschuks. In den erfinderischen Gummimischungen sind die erfindungsgemäßen silanmodifizierten Polybutadiene als Additiv eingesetzt und ersetzen anteilig das Schwefelsilan.

**Tabelle 8**

| Substanz | Menge | Menge | Menge | Menge | Menge | Menge | Menge |
|---|---|---|---|---|---|---|---|
| | [phr] | [phr] | [phr] | [phr] | [phr] | [phr] | [phr] |
| 1. Stufe | Ref. kautschukmischung VIII | Ref. kautschukmischung IX enthaltend Vergleichsbei spiel Hydroxytermi niertes Polybutadien | Erf. Kautschukmischung X, enthaltend erf. Beispiel 2A | Erf. Kautschukmischung XI, enthaltend erf. Beispiel 2B | Erf. Kautschukmischung XII, enthaltend erf. Beispiel 2C | Erf. Kautschukmischung XIII, enthaltend erf. Beispiel 2D | Erf. Kautschukmischung XIV, enthaltend erf. Beispiel 2E |
| NR SMR 10^{a} | 100,0 | 100,0 | 100,0 | 100,0 | 100,0 | 100,0 | 100,0 |
| Kieselsäure^{b} | 55,0 | 55,0 | 55,0 | 55,0 | 55,0 | 55,0 | 55,0 |
| Fettsäure^{c} | 3,0 | 3,0 | 3,0 | 3,0 | 3,0 | 3,0 | 3,0 |
| ZnO^{d} | 3,0 | 3,0 | 3,0 | 3,0 | 3,0 | 3,0 | 3,0 |
| 6PPD^{e} | 1,0 | 1,0 | 1,0 | 1,0 | 1,0 | 1,0 | 1,0 |
| TMQ^{f} | 1,0 | 1,0 | 1,0 | 1,0 | 1,0 | 1,0 | 1,0 |
| Ozonschutzwa chs^{g} | 1,0 | 1,0 | 1,0 | 1,0 | 1,0 | 1,0 | 1,0 |
| Si 266^{h} | 5 | 4 | 4 | 4 | 4 | 4 | 4 |
| Hydroxytermini ertes Polybutadienⁱ | | 7,5 | | | | | |
| Beispiel 2A | | | 7,5 | | | | |
| Beispiel 2B | | | | 7,5 | | | |
| Beispiel 2C | | | | | 7,5 | | |
| Beispiel 2D | | | | | | 7,5 | |
| Beispiel 2E | | | | | | | 7,5 |

| 2. Stufe | | | | | | | |
|---|---|---|---|---|---|---|---|
| Batch | | | | | | | |
| Stufe 1 | | | | | | | |

| 3. Stufe | | | | | | | |
|---|---|---|---|---|---|---|---|
| Batch | | | | | | | |
| Stufe 2 | | | | | | | |
| DPG-80^{j} | 2,5 | 2,5 | 2,5 | 2,5 | 2,5 | 2,5 | 2,5 |
| CBS^{k} | 1,0 | 1,0 | 1,0 | 1,0 | 1,0 | 1,0 | 1,0 |
| Schwefel^{l} | 2,0 | 2,0 | 2,0 | 2,0 | 2,0 | 2,0 | 2,0 |

| | | | | | | | |
|---|---|---|---|---|---|---|---|
| ^{a)} NR TSR: SMR 10 der Firma Nordmann, Rassmann GmbH (TSR = Technically Specified Rubber; SMR = Standard Malaysian Rubber) ^{b)} Kieselsäure: ULTRASIL® 7000 GR der Firma Evonik Industries AG. ^{c)} Fettsäure: Fettsäuren Gemisch, EDENOR ST1 GS, Firma Caldic Deutschland Chemie B.V. ^{d)} ZnO: ZnO RS RAL 844 C der Firma Arnsperger Chemikalien GmbH. ^{e)} 6PPD: *N*-(1,3-dimethylbutyl)-*N'*-phenyl-*p*-phenylene diamine, Vulkanox 4020/LG der Firma Rhein Chemie Rheinau GmbH. ^{f)} TMQ: polymerized 2,2,4-trimethyl-1,2-dihydroquinoline, Vulkanox HS/LG der Firma Rhein Chemie Rheinau GmbH. ^{g)} Ozonschutzwachs: Protektor G3108 der Firma Paramelt B.V. ^{h)} Si 266®: Bis(triethoxysilylpropyl)disulfide der Firma Evonik Industries AG.# ⁱ⁾ Hydroxyterminiertes Polybutadien (POLYVEST HT) der Firma Evonik ^{j)} DPG-80: Gemisch aus 80 % *N,N'*-Diphenylguanidin und aus 20 % elastomerem Träger und Dispergiermittel, Rhenogran® DPG-80 der Firma Rhein Chemie GmbH. ^{k)} CBS: *N*-Cyclohexyl-2-benzothiazolsulfenamid, CZ/EG-C der Firma Rhein Chemie Rheinau GmbH. ^{l)} Schwefel: Mahlschwefel 80/90° der Firma Solvay & CPC Barium Strontium GmbH & Co.KG | | | | | | | |

Die Mischungen werden dreistufig in einem 1,5 I Innenmischer (E-Typ) bei einer Batch-Temperatur von 150°C gemäß der in Tabelle 9 beschriebenen Mischvorschrift hergestellt.

**Tabelle 9**

| | Stufe 1 |
|---|---|
| Einstellungen | |
| Mischaggregat | Von HF Mixing Group GmbH; Typ GK 1,5 E |
| Füllgrad | 0,65 |
| Drehzahl | 70 min⁻¹ |
| Stempeldruck | 5,5 bar |
| Durchflusstemp. | 70°C |

| Mischvorgang | |
|---|---|
| 0 bis 0,5 min | SMR 10 |
| 0,5 min | ½ ULTRASIL 7000 GR abzüglich 20g, Si 266, ZnO, Fettsäure, wenn vorhanden erfindungsgemäßes silanmodifiziertes Polybutadien, welches direkt vor der Zugabe mit 20g ULTRASIL 7000 GR der ersten Hälfte ULTRASIL 7000 GR vermischt wurde |
| 0,5 bis 1,5 min | Mischen |
| 1,5 min | Lüften und säubern |
| 1,5 bis 2,5 min | ½ ULTRASIL 7000 GR, Ozonschutzwachs, 6PPD, TMQ |
| 2,5 min | Lüften und säubern |
| 2,5 bis 4,0 min | Mischen bei 150°C, ggfs. Drehzahlvariation |
| 4,0 min | Lüften |
| 3 bis 5,5 min | Mischen bei 150°C, ggfs. Drehzahlvariation |
| 5,5 min | ausfahren und auf Labormischwalzwerk 45 s ein Fell bilden (Laborwalzwerk: Durchmesser 250 mm, Länge 190 mm, Walzenspalt 4 mm, Durchflusstemperatur 60°C) 24 h Lagerung bei Raumtemperatur |
| | |

| | Stufe 2 |
|---|---|
| Einstellungen | |
| Mischaggregat | wie in Stufe 1 bis auf |
| Füllgrad | 0,62 |
| Drehzahl | 80 min⁻¹ |
| Durchflusstemp. | 80°C |
| | |

| Mischvorgang | |
|---|---|
| 0 bis 1,0 min | Batch Stufe 1 aufbrechen |
| 1,0 bis 3,0 min | Mischen bei 150°C, ggfs. Drehzahlvariation |
| 3,0 min | ausfahren und auf Labormischwalzwerk 45 s ein Fell bilden (Laborwalzwerk: Durchmesser 250 mm, Länge 190 mm, Walzenspalt 4 mm, Durchflusstemperatur 60°C) 24 h Lagerung bei Raumtemperatur |

| | Stufe 3 |
|---|---|
| Einstellungen | |
| Mischaggregat | wie in Stufe 1 bis auf |
| Füllgrad | 0,59 |
| Drehzahl | 60 min⁻¹ |
| Durchflusstemp. | 50°C |

| Mischvorgang | |
|---|---|
| 0 bis 2,0 min | Batch Stufe 2 aufbrechen, Beschleuniger und Schwefel, mischen bei 100°C ggfs. Drehzahlvariation |
| 2,0 min | ausfahren und auf Labormischwalzwerk 20 s ein Fell bilden, innerhalb von weiteren 40 s: 3* links, 3* rechts einschneiden und umklappen sowie 3* bei engem Walzenspalt (3 mm) stürzen und anschließend ein Fell ausziehen. |
| | (Laborwalzwerk: Durchmesser 250 mm, Länge 190 mm, Walzenspalt 3-4 mm, Durchflusstemperatur 80°C) |

Das allgemeine Verfahren zur Herstellung von Kautschukmischungen und deren Vulkanisate ist in "Rubber Technology Handbook", W. Hofmann, Hanser Verlag 1994 beschrieben.

Die Vulkanisation erfolgt bei einer Temperatur von 150 °C in einer typischen Vulkanisationspresse mit einem Haltedruck von 120 bar nach t_{95%}. Die t_{95%} Zeit wurde mittels Moving Disc Rheometer (rotorloses Vulkameter) nach DIN 53529/3 bei 150°C bestimmt.

Die gummitechnische Prüfung erfolgt gemäß den in Tabelle 3 angegebenen Prüfmethoden.

In der Tabelle 10 sind die gummitechnischen Daten für die Vulkanisate angegeben.

**Tabelle 10**

| | Ref. kautschukmischung VIII | Ref. kautschukmischung IX enthaltend Vergleichsbei spiel Hydroxytermi niertes Polybutadien | Erf. Kautschukmischung X, enthaltend erf. Beispiel 2A | Erf. Kautschukmischung XI, enthaltend erf. Beispiel 2B | Erf. Kautschukmischung XII, enthaltend erf. Beispiel 2C | Erf. Kautschukmischung XIII, enthaltend erf. Beispiel 2D | Erf. Kautschukmischung XIV, enthaltend erf. Beispiel 2E |
|---|---|---|---|---|---|---|---|
| Vulkanisatergebnisse: | | | | | | | |
| DIN Abrieb *Abrieb* / *mm³* | 124 | 127 | 113 | 112 | 111 | 105 | 113 |
| Zugversuch am Ring bei 60°C *Modul 300%* / *MPa* | 12,1 | 8,6 | 13,6 | 12,6 | 12,8 | 11,7 | 11,6 |
| Shore A Härte *Shore A Härte* / *SH* | 62 | 57 | 64 | 62 | 64 | 62 | 62 |
| Ball Rebound *Rückprallelastizität bei 60°C*/*%* | 68,5 | 70,7 | 73,8 | 72,9 | 74,5 | 73,1 | 72,5 |
| Viskoelastische Eigenschaften, 60°C, Rubber Process Analyzer (RPA), Strain Sweep, 1.7 Hz, 0.28% - 42% Dehnung | | | | | | | |
| Maximaler Verlustfaktor tan *δ* / - | 0,147 | 0,114 | 0,098 | 0,096 | 0,095 | 0,100 | 0,103 |
| Viskoelastische Eigenschaften bei 60°C, 16 Hz, 50 N Vorkraft, 25 N Ampl.kraft | | | | | | | |
| Verlustfaktor tan δ / - | 0,077 | 0,069 | 0,053 | 0,052 | 0,051 | 0,055 | 0,055 |

Die erfindungsgemäßen Kautschukmischungen X bis XIV zeigen einen verbesserten Rollwiderstand (geringere tan δ Werte und höhere Rückprallelastizitäten bei 60°C) und einen verbesserten DIN Abrieb im Vergleich zu der Referenzkautschukmischung VIII.

Ist der Silanmodifizierungsgrad des Polybutadiens null (Referenzkautschukmischung IX), sind die Vorteile im Vergleich zur Referenzkautschukmischung VIII nicht vorhanden (DIN Abrieb, Modul 300%) oder deutlich weniger stark ausgeprägt (tan δ und Rückprallelastizität bei 60°C).

### Beispiel 7: Kautschukmischungen IV

Die für die Kautschukmischungen verwendeten Rezepturen sind in der folgenden Tabelle 8 angegeben. Dabei bedeutet die Einheit phr Gewichtsanteile bezogen auf 100 Teile des eingesetzten Rohkautschuks. In den erfinderischen Gummimischungen sind die erfindungsgemäßen silanmodifizierten Polybutadiene als Additiv eingesetzt und ersetzen anteilig das Schwefelsilan.

**Tabelle 11**

| Substanz | Menge [phr] | Menge [phr] | Menge [phr] | Menge [phr] | Menge [phr] | Menge [phr] | Menge [phr] |
|---|---|---|---|---|---|---|---|
| 1. Stufe | Ref. kautschukmischung XV | Erf. Kautschukmischung XVI, enthaltend erf. Beispiel 2F | Erf. Kautschukmischung XVII, enthaltend erf. Beispiel 2G | Erf. Kautschukmischung XIII, enthaltend erf. Beispiel 2H | Erf. Kautschukmischung XIX, enthaltend erf. Beispiel 2I | Erf. Kautschukmischung XX, enthaltend erf. Beispiel 2J | Erf. Kautschukmischung XXI, enthaltend erf. Beispiel 3 |
| NR SMR 10^{a} | 100,0 | 100,0 | 100,0 | 100,0 | 100,0 | 100,0 | 100,0 |
| Kieselsäure^{b} | 55,0 | 55,0 | 55,0 | 55,0 | 55,0 | 55,0 | 55,0 |
| Fettsäure^{c} | 3,0 | 3,0 | 3,0 | 3,0 | 3,0 | 3,0 | 3,0 |
| ZnO^{d} | 3,0 | 3,0 | 3,0 | 3,0 | 3,0 | 3,0 | 3,0 |
| 6PPD^{e} | 1,0 | 1,0 | 1,0 | 1,0 | 1,0 | 1,0 | 1,0 |
| TMQ^{f} | 1,0 | 1,0 | 1,0 | 1,0 | 1,0 | 1,0 | 1,0 |
| Ozonschutzwa | 1,0 | 1,0 | 1,0 | 1,0 | 1,0 | 1,0 | 1,0 |
| chs^{g} | | | | | | | |
| Si 266^{h} | 5 | 4 | 4 | 4 | 4 | 4 | 4 |
| Beispiel 2E | | 7,5 | | | | | |
| Beispiel 2F | | | 7,5 | | | | |
| Beispiel 2G | | | | 7,5 | | | |
| Beispiel 2H | | | | | 7,5 | | |
| Beispiel 2I | | | | | | 7,5 | |
| Beispiel 3 | | | | | | | 7,5 |

| 2. Stufe | | | | | | | |
|---|---|---|---|---|---|---|---|
| Batch | | | | | | | |
| Stufe 1 | | | | | | | |

| 3. Stufe | | | | | | | |
|---|---|---|---|---|---|---|---|
| Batch | | | | | | | |
| Stufe 2 | | | | | | | |
| DPG-80^{j} | 2,5 | 2,5 | 2,5 | 2,5 | 2,5 | 2,5 | 2,5 |
| CBS^{k} | 1,0 | 1,0 | 1,0 | 1,0 | 1,0 | 1,0 | 1,0 |
| Schwefel^{l} | 2,0 | 2,0 | 2,0 | 2,0 | 2,0 | 2,0 | 2,0 |
| | | | | | | | |

| | | | | | | | |
|---|---|---|---|---|---|---|---|
| ^{a)} NR TSR: SMR 10 der Firma Nordmann, Rassmann GmbH (TSR = Technically Specified Rubber; SMR = Standard Malaysian Rubber) ^{b)} Kieselsäure: ULTRASIL® 7000 GR der Firma Evonik Industries AG. ^{c)} Fettsäure: Fettsäuren Gemisch, EDENOR ST1 GS, Firma Caldic Deutschland Chemie B.V. ^{d)} ZnO: ZnO RS RAL 844 C der Firma Arnsperger Chemikalien GmbH. ^{e)} 6PPD: *N*-(1,3-dimethylbutyl)-*N'*-phenyl-*p*-phenylene diamine, Vulkanox 4020/LG der Firma Rhein Chemie Rheinau GmbH. ^{f)} TMQ: polymerized 2,2,4-trimethyl-1,2-dihydroquinoline, Vulkanox HS/LG der Firma Rhein Chemie Rheinau GmbH. ^{g)} Ozonschutzwachs: Protektor G3108 der Firma Paramelt B.V. ^{h)} Si 266®: Bis(triethoxysilylpropyl)disulfide der Firma Evonik Industries AG.# ⁱ⁾ Hydroxyterminiertes Polybutadien (POLYVEST HT) der Firma Evonik ^{j)} DPG-80: Gemisch aus 80 % *N*,*N'*-Diphenylguanidin und aus 20 % elastomerem Träger und Dispergiermittel, Rhenogran® DPG-80 der Firma Rhein Chemie GmbH. ^{k)} CBS: *N*-Cyclohexyl-2-benzothiazolsulfenamid, CZ/EG-C der Firma Rhein Chemie Rheinau GmbH. ^{l)} Schwefel: Mahlschwefel 80/90° der Firma Solvay & CPC Barium Strontium GmbH & Co.KG | | | | | | | |

Die Mischungen werden dreistufig in einem 1,5 I Innenmischer (E-Typ) bei einer Batch-Temperatur von 150°C gemäß der in Tabelle 9 beschriebenen Mischvorschrift hergestellt.

**Tabelle 12**

| | Stufe 1 |
|---|---|
| Einstellungen | |
| Mischaggregat | Von HF Mixing Group GmbH; Typ GK 1,5 E |
| Füllgrad | 0,65 |
| Drehzahl | 70 min⁻¹ |
| Stempeldruck | 5,5 bar |
| Durchflusstemp. | 70°C |

| Mischvorgang | |
|---|---|
| 0 bis 0,5 min | SMR 10 |
| 0,5 min | ½ ULTRASIL 7000 GR abzüglich 20g, Si 266, ZnO, Fettsäure, wenn vorhanden erfindungsgemäßes silanmodifiziertes Polybutadien, welches direkt vor der Zugabe mit 20g ULTRASIL 7000 GR der ersten Hälfte ULTRASIL 7000 GR vermischt wurde |
| 0,5 bis 1,5 min | Mischen |
| 1,5 min | Lüften und säubern |
| 1,5 bis 2,5 min | ½ ULTRASIL 7000 GR, Ozonschutzwachs, 6PPD, TMQ |
| 2,5 min | Lüften und säubern |
| 2,5 bis 4,0 min | Mischen bei 150°C, ggfs. Drehzahlvariation |
| 4,0 min | Lüften |
| 3 bis 5,5 min | Mischen bei 150°C, ggfs. Drehzahlvariation |
| 5,5 min | ausfahren und auf Labormischwalzwerk 45 s ein Fell bilden (Laborwalzwerk: Durchmesser 250 mm, Länge 190 mm, Walzenspalt 4 mm, Durchflusstemperatur 60°C) 24 h Lagerung bei Raumtemperatur |
| | |

| | Stufe 2 |
|---|---|
| Einstellungen | |
| Mischaggregat | wie in Stufe 1 bis auf |
| Füllgrad | 0,62 |
| Drehzahl | 80 min⁻¹ |
| Durchflusstemp. | 80°C |

| Mischvorgang | |
|---|---|
| 0 bis 1,0 min | Batch Stufe 1 aufbrechen |
| 1,0 bis 3,0 min | Mischen bei 150°C, ggfs. Drehzahlvariation |
| 3,0 min | ausfahren und auf Labormischwalzwerk 45 s ein Fell bilden (Laborwalzwerk: Durchmesser 250 mm, Länge 190 mm, Walzenspalt 4 mm, Durchflusstemperatur 60°C) 24 h Lagerung bei Raumtemperatur |
| | |

| | Stufe 3 |
|---|---|
| Einstellungen | |
| Mischaggregat | wie in Stufe 1 bis auf |
| Füllgrad | 0,59 |
| Drehzahl | 60 min⁻¹ |
| Durchflusstemp. | 50°C |

| Mischvorgang | |
|---|---|
| 0 bis 2,0 min | Batch Stufe 2 aufbrechen, Beschleuniger und Schwefel, mischen bei 100°C ggfs. Drehzahlvariation |
| 2,0 min | ausfahren und auf Labormischwalzwerk 20 s ein Fell bilden, innerhalb von weiteren 40 s: 3* links, 3* rechts einschneiden und umklappen sowie 3* bei engem Walzenspalt (3 mm) stürzen und anschließend ein Fell ausziehen. |
| | (Laborwalzwerk: Durchmesser 250 mm, Länge 190 mm, Walzenspalt 3-4 mm, Durchflusstemperatur 80°C) |

Das allgemeine Verfahren zur Herstellung von Kautschukmischungen und deren Vulkanisate ist in "Rubber Technology Handbook", W. Hofmann, Hanser Verlag 1994 beschrieben.

Die Vulkanisation erfolgt bei einer Temperatur von 150 °C in einer typischen Vulkanisationspresse mit einem Haltedruck von 120 bar nach t_{95%}. Die t_{95%} Zeit wurde mittels Moving Disc Rheometer (rotorloses Vulkameter) nach DIN 53529/3 bei 150°C bestimmt.

Die gummitechnische Prüfung erfolgt gemäß den in Tabelle 3 angegebenen Prüfmethoden.

In der Tabelle 10 sind die gummitechnischen Daten für die Vulkanisate angegeben.

**Tabelle 13**

| | Ref. kautschukmischung XV | Erf. Kautschukmischung XVI, enthaltend erf. Beispiel 2F | Erf. Kautschukmischung XVII, enthaltend erf. Beispiel 2G | Erf. Kautschukmischung XIII, enthaltend erf. Beispiel 2H | Erf. Kautschukmischung XIX, enthaltend erf. Beispiel 2I | Erf. Kautschukmischung XX, enthaltend erf. Beispiel 2J | Erf. Kautschukmischung XXI, enthaltend erf. Beispiel 3 |
|---|---|---|---|---|---|---|---|
| Vulkanisatergebnisse: | | | | | | | |
| DIN Abrieb | | | | | | | |
| *Abrieb* / *mm³* | 123 | 119 | 123 | 126 | 131 | 126 | 135 |
| Zugversuch am Ring bei 60°C | | | | | | | |
| *Modul 300%* /*MPa* | 8,6 | 8,4 | 8,4 | 8,0 | 7,5 | 7,2 | 8,0 |
| Shore A Härte *Shore A Härte* / *SH* | 63 | 60 | 60 | 59 | 59 | 58 | 57 |
| Ball Rebound *Rückprallelastizität bei 60°C*/*%* | 69,2 | 72,5 | 71,9 | 70,6 | 69,1 | 68,9 | 75,5 |
| Viskoelastische Eigenschaften, 60°C, Rubber Process Analyzer (RPA), Strain Sweep, 1.7 Hz, 0.28% - 42% Dehnung | | | | | | | |
| Maximaler Verlustfaktor tan δ / - | 0,127 | 0,117 | 0,106 | 0,104 | 0,108 | 0,111 | 0,078 |
| Viskoelastische Eigenschaften bei 60°C, 16 Hz, 50 N Vorkraft, 25 N Ampl.kraft | | | | | | | |
| Verlustfaktor tan δ / - | 0,080 | 0,065 | 0,061 | 0,066 | 0,068 | 0,068 | 0,055 |

Die erfindungsgemäßen Kautschukmischungen XVI bis XXI zeigen einen verbesserten Rollwiderstand (geringere tan δ Werte und höhere Rückprallelastizitäten bei 60°C) im Vergleich zu der Referenzkautschukmischung XV.

Mit sinkendem Silanmodifizierungsgrad des Polybutadiens sind die Vorteile im Vergleich zur Referenzkautschukmischung XVI nicht vorhanden (DIN Abrieb, Modul 300%) oder deutlich weniger stark ausgeprägt (tan δ und Rückprallelastizität bei 60°C).

Kautschukmischung XXI, basierend auf einem durch anionische Polymerisation hergestelltem und anschließend modifiziertem Polybutadien, zeigt im Vergleich zu durch radkalische Polymerisation hergestellten Polybutadienen einen verschlechterten Abrieb (z. B. Kautschukmischungen XVI) und teilweise geringerer Härte und geringerem Modulus 300 (höherer DIN Abrieb und geringere Shore A Härte). Diese Effekte verstärken sich mit zunehmendem Silanisierungsgrad (vgl. Bsp. X-XIV)

### Beispiel 8: Kautschukmischungen V

Die für die Kautschukmischungen verwendete Rezeptur ist in der folgenden Tabelle 11 angegeben. Dabei bedeutet die Einheit phr Gewichtsanteile bezogen auf 100 Teile des eingesetzten Rohkautschuks. In der erfinderischen Gummimischung ist das erfindungsgemäße silanmodifizierte Polybutadien als Additiv eingesetzt.

**Tabelle 14**

| Substanz | Menge [phr] | Menge [phr] |
|---|---|---|
| 1. Stufe | Ref.kautschukmischung XXII | Erf. Kautschukmischung XXIII, enthaltend erf. Beispiel 1 |
| NR SMR 10^{a} | 80,0 | 80,0 |
| BR^{b} | 20,0 | 20,0 |
| Kieselsäure^{c} | 55,0 | 55,0 |
| Fettsäure^{d} | 3,0 | 3,0 |
| ZnO^{e} | 3,0 | 3,0 |
| 6PPD^{f} | 1,0 | 1,0 |
| TMQ^{g} | 1,0 | 1,0 |
| Ozonschutzwachs^{h} | 1,0 | 1,0 |
| Si 266ⁱ | 5 | 5 |
| Beispiel 1 | | 7,5 |

| 2. Stufe | | |
|---|---|---|
| Batch | | |
| Stufe 1 | | |

| 3. Stufe | | |
|---|---|---|
| Batch | | |
| Stufe 2 | | |
| DPG-80^{j} | 2,5 | 2,5 |
| CBS^{k} | 1,0 | 1,0 |
| Schwefel^{l} | 2,0 | 2,0 |

| | | |
|---|---|---|
| Verwendete Substanzen: ^{a)} NR TSR: SMR 10 der Firma Nordmann, Rassmann GmbH (TSR = Technically Specified Rubber; SMR = Standard Malaysian Rubber). ^{b)} BR: hoch-cisPolybutadien Kautschuk CB 24, der Firma Lanxess AG. ^{c)} Kieselsäure: ULTRASIL® 7000 GR der Firma Evonik Industries AG. ^{d)} Fettsäure: Fettsäuren Gemisch, EDENOR ST1 GS, Firma Caldic Deutschland Chemie B.V. ^{e)} ZnO: ZnO RS RAL 844 C der Firma Arnsperger Chemikalien GmbH. ^{f)} 6PPD: *N*-(1,3-dimethylbutyl)-*N'*-phenyl-*p*-phenylene diamine, Vulkanox 4020/LG der Firma Rhein Chemie Rheinau GmbH. ^{g)} TMQ: polymerized 2,2,4-trimethyl-1,2-dihydroquinoline, Vulkanox HS/LG der Firma Rhein Chemie Rheinau GmbH. ^{h)} Ozonschutzwachs: Protektor G3108 der Firma Paramelt B.V. ⁱ⁾ Si 266®: Bis(triethoxysilylpropyl)disulfide der Firma Evonik Industries AG. ^{j)} DPG-80: Gemisch aus 80 % *N*,*N'*-Diphenylguanidin und aus 20 % elastomerem Träger und Dispergiermittel, Rhenogran® DPG-80 der Firma Rhein Chemie GmbH. ^{k)} CBS: *N*-Cyclohexyl-2-benzothiazolsulfenamid, CZ/EG-C der Firma Rhein Chemie Rheinau GmbH. ^{l)} Schwefel: Mahlschwefel 80/90° der Firma Solvay & CPC Barium Strontium GmbH & Co.KG | | |

Die Mischungen werden dreistufig in einem 1,5 I Innenmischer (E-Typ) bei einer Batch-Temperatur von 150°C gemäß der in Tabelle 12 beschriebenen Mischvorschrift hergestellt.

**Tabelle 15**

| | Stufe 1 |
|---|---|
| Einstellungen | |
| Mischaggregat | Von HF Mixing Group GmbH; Typ GK 1,5 E |
| Füllgrad | 0,65 |
| Drehzahl | 70 min⁻¹ |
| Stempeldruck | 5,5 bar |
| Durchflusstemp. | 70°C |

| Mischvorgang | |
|---|---|
| 0 bis 0,5 min | SMR 10, BR CB 24 |
| 0,5 min | ½ ULTRASIL 7000 GR, Si 266, ZnO, Fettsäure, wenn vorhanden erfindungsgemäßes silanmodifiziertes Polybutadien |
| 0,5 bis 1,0 min | Mischen |
| 1,0 min | Lüften und säubern |
| 1,0 bis 2,0 min | ½ ULTRASIL 7000 GR, Ozonschutzwachs, 6PPD, TMQ |
| 2,0 bis 3 min | Mischen bei 150°C, ggfs. Drehzahlvariation |
| 3 min | Lüften |
| 3 bis 5 min | Mischen bei 150°C, ggfs. Drehzahlvariation |
| 5 min | ausfahren und auf Labormischwalzwerk 45 s ein Fell bilden (Laborwalzwerk: Durchmesser 250 mm, Länge 190 mm, Walzenspalt 4 mm, Durchflusstemperatur 60°C) 24 h Lagerung bei Raumtemperatur |
| | |

| | Stufe 2 |
|---|---|
| Einstellungen | |
| Mischaggregat | wie in Stufe 1 bis auf |
| Füllgrad | 0,62 |
| Mischvorgang | |
| 0 bis 1 min | Batch Stufe 1 aufbrechen |
| 1 bis 3 min | Mischen bei 150°C, ggfs. Drehzahlvariation |
| 3 min | ausfahren und auf Labormischwalzwerk 45 s ein Fell bilden (Laborwalzwerk: Durchmesser 250 mm, Länge 190 mm, Walzenspalt 4 mm, Durchflusstemperatur 60°C) 24 h Lagerung bei Raumtemperatur |
| | |

| | Stufe 3 |
|---|---|
| Einstellungen | |
| Mischaggregat | wie in Stufe 1 bis auf |
| Füllgrad | 0,59 |
| Drehzahl | 50 min⁻¹ |
| Durchflusstemp. | 50°C |
| Mischvorgang | |
| 0 bis 2 min | Batch Stufe 2 aufbrechen, Beschleuniger und Schwefel, mischen bei 100°C ggfs. Drehzahlvariation |
| 2 min | ausfahren und auf Labormischwalzwerk 20 s ein Fell bilden, innerhalb von weiteren 40 s: 3* links, 3* rechts einschneiden und umklappen sowie 3* bei engem Walzenspalt (3 mm) stürzen und anschließend ein Fell ausziehen. |
| | (Laborwalzwerk: Durchmesser 250 mm, Länge 190 mm, Walzenspalt 3-4 mm, Durchflusstemperatur 80°C) |

Das allgemeine Verfahren zur Herstellung von Kautschukmischungen und deren Vulkanisate ist in "Rubber Technology Handbook", W. Hofmann, Hanser Verlag 1994 beschrieben.

Die Vulkanisation erfolgt bei einer Temperatur von 150 °C in einer typischen Vulkanisationspresse mit einem Haltedruck von 120 bar nach t_{95%}. Die t_{95%} Zeit wurde mittels Moving Disc Rheometer (rotorloses Vulkameter)nach DIN 53529/3 bei 150°C bestimmt.

Die gummitechnische Prüfung erfolgt gemäß den in Tabelle 3 angegebenen Prüfmethoden.

In der Tabelle 13 sind die gummitechnischen Daten für die Vulkanisate angegeben.

**Tabelle 16**

| | Ref.kautschukmischung XXII | Erf. Kautschukmischung XXIII, enthaltend erf. Beispiel 1 |
|---|---|---|
| Vulkanisatergebnisse: | | |
| DIN Abrieb | | |
| *Abrieb* / *mm³* | 113 | 105 |
| Zugversuch am Ring bei 23°C *Modul 300%* /*MPa* | 8,7 | 11,3 |
| Shore A Härte *Shore A Härte* / *SH* | 63 | 65 |
| Ball Rebound *Rückprallelastizität bei 60°C* / % | 72,1 | 76,0 |
| Viskoelastische Eigenschaften, 60°C, Rubber Process Analyzer (RPA), Strain Sweep, 1.7 Hz, 0.28% - 42% Dehnung | | |
| Maximaler Verlustfaktor tan δ / | 0,148 | 0,108 |
| Viskoelastische Eigenschaften bei 60°C, 16 Hz, 50 N Vorkraft, 25 N Ampl.kraft | | |
| Verlustfaktor tan δ / - | 0,064 | 0,047 |

Die erfindungsgemäße Kautschukmischung XXIII zeigt einen verbesserten Rollwiderstand (geringere tan δ Werte und höhere Rückprallelastizitäten bei 60°C) im Vergleich zu der Referenzkautschukmischung XXII. Ferner wird durch den Zusatz von erfindungsgemäßem silanmodifizierten Polybutadien ein verbessertes Verstärkungsverhalten (Modul 300%) und ein geringerer Abrieb (DIN Abrieb) erzielt.

### Zusammenfassung Kautschukmischungen:

Es konnte gezeigt werden, dass durch Addition silanmodifizierter Polybutadiene zu dem Fachmann bekannten, typischen Kautschukformulierungen die Kerneigenschaften von Reifen, insbesondere Abrieb und Rollwiderstand, deutlich verbessert werden können. Dies gilt sowohl für naturkautschukbasierte Reifen (Beispiele 4-7), als auch solche, die auf einer Mischung aus Naturkautschuk und Butylkautschuk basieren (Beispiel 8).

Insbesondere gilt dies für silanmodifizierte Polybutadiene, die auf radikalisch basierten Polybutadienen basieren wie u.a. der Vergleich von DIN Abrieb, Modulus 300 und Shore A Härte der Kauschukmischungen X und XXI zeigt. Darüber hinaus weisen die durch radikalische Polymersisation hergestellten Polybutadiene eine deutlich geringere Viskosität auf, was sowohl die Handhabung als auch die Verarbeitbarkeit erleichtert.

## Patentansprüche

1. Verwendung von silanmodifizierten Polybutadienen in Kautschukmischungen, wobei das Polybutadien die aus 1,3-Butadien abgeleiteten Monomereinheiten
(A) 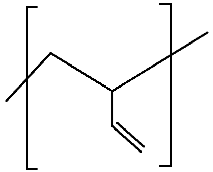
(B) 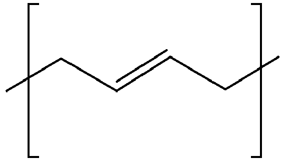 und
(C) 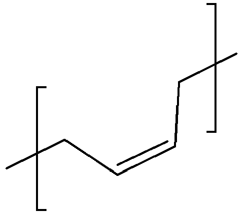 umfasst, und wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei die silanmodifizierten Polybutadiene erhältlich sind durch Umsetzung von durch radikalische Polymerisation hergestellten hydroxyterminierten Polybutadienen mit einer oder mehreren Organosilanverbindungen.

2. Verwendung gemäß Anspruch 1, **dadurch gekennzeichnet, dass** der Anteil von A) an der Gesamtheit der im Polybutadien enthaltenen aus 1,3-Butadien abgeleiteten Monomereinheiten 15 bis 30 Mol-%, der Anteil von B) an der Gesamtheit der im Polybutadien enthaltenen aus 1,3-Butadien abgeleiteten Monomereinheiten 50 bis 70 Mol-% und der Anteil von C) an der Gesamtheit der im Polybutadien enthaltenen aus 1,3-Butadien abgeleiteten Monomereinheiten 15 bis 30 Mol-% beträgt.

3. Verwendung gemäß Anspruch 1 oder 2, **dadurch gekennzeichnet, dass** die Organosilanverbindung ausgewählt ist aus der Gruppe umfassend Verbindungen der Formel I
OCN-R-Si(OR¹)ₓ(R²)₃₋ₓ I
worin R lineare oder verzweigte Alkylenketten mit 1-4 Kohlenstoffatomen und R¹ bzw. R² gleichzeitig oder unabhängig voneinander lineare oder verzweigte Alkylketten mit 1-5 Kohlenstoffatomen Gruppen bedeuten.

4. Kautschukmischungen, enthaltend silanmodifizierte Polybutadiene, wobei das Polybutadien die aus 1,3-Butadien abgeleiteten Monomereinheiten
(A) 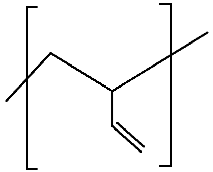
(B) 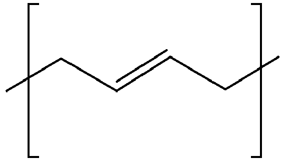 und
(C) 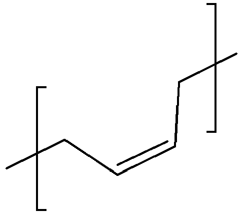 umfasst, und wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt, wobei die silanmodifizierten Polybutadiene erhältlich sind durch Umsetzung von durch radikalische Polymerisation hergestellten hydroxyterminierten Polybutadienen mit einer oder mehreren Organosilanverbindungen.

5. Kautschukmischungen gemäß Anspruch 4, **dadurch gekennzeichnet, dass** das silanmodifizierte Polybutadien in einer Menge von 0,5 bis 25 Gew.-Teile, bezogen auf 100 Gew.-Teile Kautschuks, eingesetzt wird.

6. Kautschukmischungen gemäß Anspruch 4, **dadurch gekennzeichnet, dass** diese 10 bis 150 Gew.-Teile gefällte Kieselsäure, 0 bis 100 Gew.-Teilen Ruß und 0,5 bis 15 Gew.-Teile silanmodifiziertes Polybutadien gemäß Anspruch 1, jeweils bezogen auf 100 Gew.-Teile Kautschuk, enthält.

7. Kautschukmischungen gemäß einem der Ansprüche 4 bis 6, **dadurch gekennzeichnet, dass** diese ein Organosilan enthält.

8. Kautschukmischungen gemäß Anspruch 7, **dadurch gekennzeichnet, dass** diese 0,5 bis 20 Gew.-Teile Organosilan, bezogen auf 100 Gew.-Teile Kautschuk, enthält.

9. Kautschukmischungen gemäß Anspruch 7, **dadurch gekennzeichnet, dass** diese Naturkautschuk oder Mischungen aus Naturkautschuk mit Dienkautschuk, 10 bis 150 Gew.-Teile gefällte Kieselsäure, 0 bis 100 Gew.-Teilen Ruß, 0,5 bis 20 Gew.-Teile Organosilan und 0,5 bis 25 Gew.-Teile silanmodifiziertes Polybutadien gemäß Anspruch 1, jeweils bezogen auf 100 Gew.-Teile Kautschuk, enthält.

10. Verwendung der Kautschukmischungen gemäß einem der Ansprüche 4 bis 9 zur Herstellung von Reifen, Profilen, Kabelmänteln, Schläuchen, Treibriemen, Förderbändern, Reifenbelägen, Schuhsohlen, Dichtungsringen und Dämpfungselementen.

11. Silanterminierte Polybutadiene, erhältlich durch ein Verfahren, umfassend die Schritte
a) Bereitstellen eines mittels radikalischer Polymerisation hergestellten Polybutadiens mit Hydroxygruppen,
b) Umsetzen des Polybutadiens mit Hydroxygruppen aus Schritt a) mit einer Organosilanverbindung
wobei das Polybutadien die aus 1,3-Butadien abgeleiteten Monomereinheiten
(A) 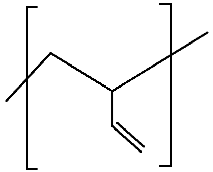
(B) 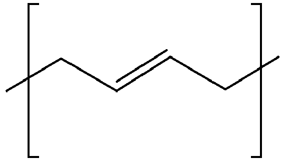 und
(C) 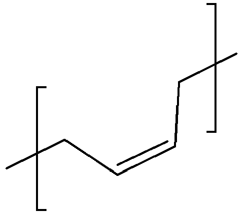 umfasst, und wobei der Anteil von A an der im Polybutadien enthaltenen aus 1,3-Butadien abgeleiteten Gesamtheit der Monomereinheiten 10 bis 60 Molprozent beträgt, und wobei die Summe der Anteile von B und C an der Gesamtheit der im Polybutadien enthaltenen aus 1,3-Butadien abgeleiteten Monomereinheiten 40 bis 90 Molprozent beträgt.

## Claims

1. Use of silane-modified polybutadienes in rubber mixtures, wherein the polybutadiene comprises the 1,3-butadiene-derived monomer units
(A) 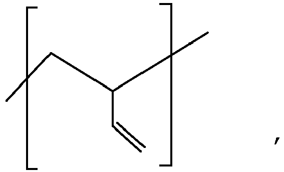
(B) 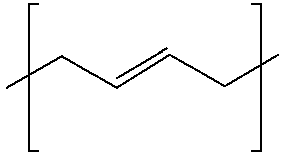 and
(C) 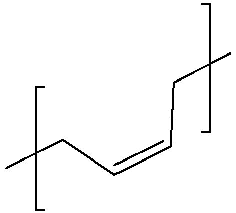 and wherein the proportion of A in the entirety of the 1,3-butadiene-derived monomer units present in the polybutadiene is from 10 to 60 mol per cent, and wherein the sum of the proportions of B and C in the entirety of the 1,3-butadiene-derived monomer units present in the polybutadiene is from 40 to 90 mol per cent, wherein the silane-modified polybutadienes are obtainable by reacting hydroxyl-terminated polybutadienes produced by free-radical polymerization with one or more organosilane compounds.

2. Use according to Claim 1, **characterized in that** the proportion of A) in the entirety of the 1,3-butadiene-derived monomer units present in the polybutadiene is from 15 to 30 mol per cent, the proportion of B) in the entirety of the 1,3-butadiene-derived monomer units present in the polybutadiene is from 50 to 70 mol per cent and the proportion of C) in the entirety of the 1,3-butadiene-derived monomer units present in the polybutadiene is from 15 to 30 mol per cent.

3. Use according to Claim 1 or 2, **characterized in that** the organosilane compound is selected from the group comprising compounds of formula I
OCN-R-Si(OR¹)ₓ(R²)₃₋ₓ I
where R represents linear or branched alkylene chains having 1-4 carbon atoms and R¹ and R² simultaneously or independently of one another represent linear or branched alkyl chains having 1-5 carbon atoms.

4. Rubber mixtures comprising silane-modified polybutadienes, wherein the polybutadiene comprises the 1,3-butadiene-derived monomer units
(A) 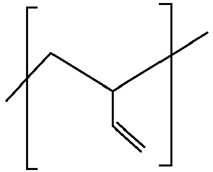 ,
(B) 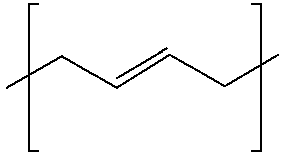 and
(C) 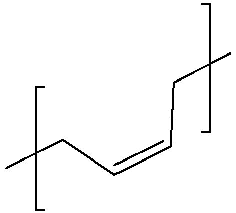 and wherein the proportion of A in the entirety of the 1,3-butadiene-derived monomer units present in the polybutadiene is from 10 to 60 mol per cent, and wherein the sum of the proportions of B and C in the entirety of the 1,3-butadiene-derived monomer units present in the polybutadiene is from 40 to 90 mol per cent, wherein the silane-modified polybutadienes are obtainable by reacting hydroxyl-terminated polybutadienes produced by free-radical polymerization with one or more organosilane compounds.

5. Rubber mixtures according to Claim 4, **characterized in that** the silane-modified polybutadiene is employed in an amount of from 0.5 to 25 parts by wt based on 100 parts by wt of rubber.

6. Rubber mixtures according to Claim 4, **characterized in that** said mixtures comprise 10 to 150 parts by wt of precipitated silica, 0 to 100 parts by wt of carbon black and 0.5 to 15 parts by wt of silane-modified polybutadiene according to Claim 1, in each case based on 100 parts by weight of rubber.

7. Rubber mixtures according to any of Claims 4 to 6, **characterized in that** said mixtures comprise an organosilane.

8. Rubber mixtures according to Claim 7, **characterized in that** said mixtures comprise 0.5 to 20 parts by wt of organosilane based on 100 parts by wt of rubber.

9. Rubber mixtures according to Claim 7, **characterized in that** said mixtures comprise natural rubber or mixtures of natural rubber and diene rubber, 10 to 150 parts by wt of precipitated silica, 0 to 100 parts by wt of carbon black, 0.5 to 20 parts by wt of organosilane and 0.5 to 25 parts by wt of silane-modified polybutadiene according to Claim 1, in each case based on 100 parts by weight of rubber.

10. Use of the rubber mixtures according to one of Claims 4 to 9 for producing tyres, profiles, cable sheaths, hoses, drive belts, conveyor belts, tyre treads, shoe soles, sealing rings and damping elements.

11. Silane-terminated polybutadienes obtainable by a process comprising the steps of
a) providing a polybutadiene produced by free-radical polymerization and having hydroxyl groups,
b) reacting the polybutadiene having hydroxyl groups from step a) with an organosilane compound, wherein the polybutadiene comprises the 1,3-butadiene-derived monomer units
(A) 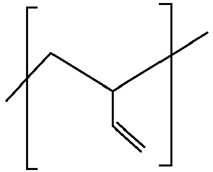
(B) 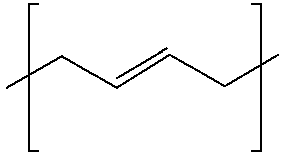 and
(C) 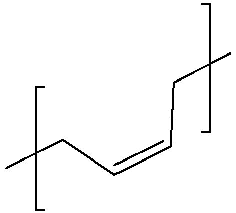 and wherein the proportion of A in the entirety of the 1,3-butadiene-derived monomer units present in the polybutadiene is from 10 to 60 mol per cent, and wherein the sum of the proportions of B and C in the entirety of the 1,3-butadiene-derived monomer units present in the polybutadiene is from 40 to 90 mol per cent.

## Revendications

1. Utilisation de polybutadiènes modifiés par un silane dans des mélanges de caoutchouc, le polybutadiène comprenant les unités monomères dérivées de 1,3-butadiène suivantes :
**(A)** 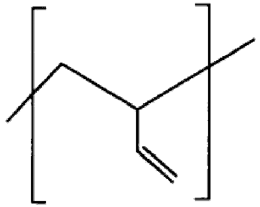
**(B)** 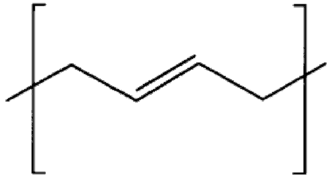 et
**(C)** 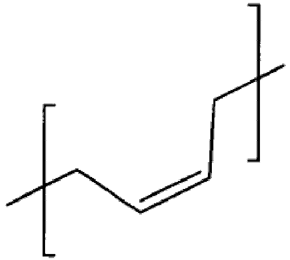 et la proportion de A dans la totalité des unités monomères dérivées de 1,3-butadiène contenues dans le polybutadiène étant de 10 à 60 pour cent en moles, et la somme des proportions de B et C dans la totalité des unités monomères dérivées de 1,3-butadiène contenues dans le polybutadiène étant de 40 à 90 pour cent en moles, les polybutadiènes modifiés par un silane pouvant être obtenus par mise en réaction de polybutadiènes à terminaison hydroxy fabriqués par polymérisation radicalaire avec un ou plusieurs composés d'organosilane.

2. Utilisation selon la revendication 1, **caractérisée en ce que** la proportion de A) dans la totalité des unités monomères dérivées de 1,3-butadiène contenues dans le polybutadiène est de 15 à 30 % en moles, la proportion de B) dans la totalité des unités monomères dérivées de 1,3-butadiène contenues dans le polybutadiène est de 50 à 70 % en moles, et la proportion de C) dans la totalité des unités monomères dérivées de 1,3-butadiène contenues dans le polybutadiène est de 15 à 30 % en moles.

3. Utilisation selon la revendication 1 ou 2, **caractérisée en ce que** le composé d'organosilane est choisi dans le groupe comprenant les composés de la formule I :
OCN-R-Si(OR¹)ₓ(R²)₃₋ₓ I
dans laquelle R signifie des chaînes alkylène linéaires ou ramifiées de 1 à 4 atomes de carbone, et R¹ et R² signifient simultanément ou indépendamment l'un de l'autre des chaînes alkyle linéaires ou ramifiées de 1 à 5 atomes de carbone.

4. Mélanges de caoutchouc, contenant des polybutadiènes modifiés par un silane, le polybutadiène comprenant les unités monomères dérivées de 1,3-butadiène suivantes :
**(A)** 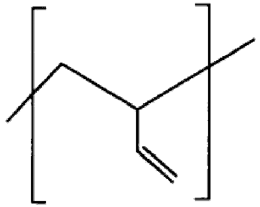
**(B)** 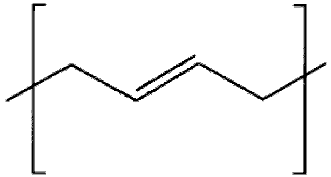 et
**(C)** 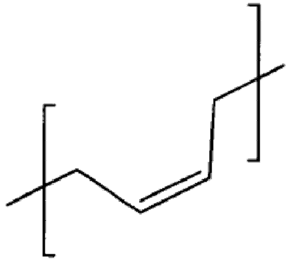 et la proportion de A dans la totalité des unités monomères dérivées de 1,3-butadiène contenues dans le polybutadiène étant de 10 à 60 pour cent en moles, et la somme des proportions de B et C dans la totalité des unités monomères dérivées de 1,3-butadiène contenues dans le polybutadiène étant de 40 à 90 pour cent en moles, les polybutadiènes modifiés par un silane pouvant être obtenus par mise en réaction de polybutadiènes à terminaison hydroxy fabriqués par polymérisation radicalaire avec un ou plusieurs composés d'organosilane.

5. Mélanges de caoutchouc selon la revendication 4, **caractérisés en ce que** le polybutadiène modifié par un silane est utilisé en une quantité de 0,5 à 25 parties en poids, par rapport à 100 parties en poids de caoutchouc.

6. Mélanges de caoutchouc selon la revendication 4, **caractérisés en ce que** ceux-ci contiennent 10 à 150 parties en poids de silice précipitée, 0 à 100 parties en poids de noir de carbone et 0,5 à 15 parties en poids de polybutadiène modifié par un silane selon la revendication 1, à chaque fois par rapport à 100 parties en poids de caoutchouc.

7. Mélanges de caoutchouc selon l'une quelconque des revendications 4 à 6, **caractérisés en ce que** ceux-ci contiennent un organosilane.

8. Mélanges de caoutchouc selon la revendication 7, **caractérisés en ce que** ceux-ci contiennent 0,5 à 20 parties en poids d'organosilane, par rapport à 100 parties en poids de caoutchouc.

9. Mélanges de caoutchouc selon la revendication 7, **caractérisés en ce que** ceux-ci contiennent du caoutchouc naturel ou des mélanges de caoutchouc naturel avec un caoutchouc diénique, 10 à 150 parties en poids de silice précipitée, 0 à 100 parties en poids de noir de carbone, 0,5 à 20 parties en poids d'organosilane, et 0,5 à 25 parties en poids de polybutadiène modifié par un silane selon la revendication 1, à chaque fois par rapport à 100 parties en poids de caoutchouc.

10. Utilisation des mélanges de caoutchouc selon l'une quelconque des revendications 4 à 9 pour la fabrication de pneus, de profilés, de gaines de câbles, de tuyaux, de courroies d'entraînement, de bandes de transport, de revêtements de pneus, de semelles de chaussures, de bagues d'étanchéité et d'éléments d'amortissement.

11. Polybutadiènes à terminaison silane, pouvant être obtenus par un procédé comprenant les étapes suivantes :
a) la préparation d'un polybutadiène contenant des groupes hydroxy fabriqué par polymérisation radicalaire,
b) la mise en réaction du polybutadiène contenant des groupes hydroxy de l'étape a) avec un composé d'organosilane,
le polybutadiène comprenant les unités monomères dérivées de 1,3-butadiène suivantes :
**(A)** 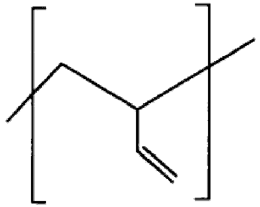
**(B)** 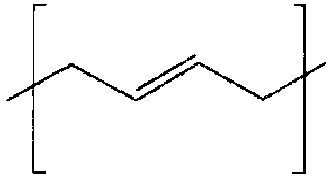 et
(C) 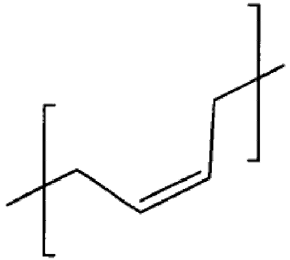 et la proportion de A dans la totalité des unités monomères dérivées de 1,3-butadiène contenues dans le polybutadiène étant de 10 à 60 pour cent en moles, et la somme des proportions de B et C dans la totalité des unités monomères dérivées de 1,3-butadiène contenues dans le polybutadiène étant de 40 à 90 pour cent en moles.
